(19) Europäisches Patentamt
European Patent Office
Office européen des brevets

(11) **EP 3 926 564 B1**

(12) **EUROPÄISCHE PATENTSCHRIFT**

(45) Veröffentlichungstag und Bekanntmachung des Hinweises auf die Patenterteilung:
**14.02.2024   Patentblatt 2024/07**

(21) Anmeldenummer: **21179482.1**

(22) Anmeldetag: **15.06.2021**

(51) Internationale Patentklassifikation (IPC):
**G06Q 10/10** (2023.01)     **G06Q 10/04** (2023.01)
**G06T 7/80** (2017.01)     **G06Q 10/00** (2023.01)

(52) Gemeinsame Patentklassifikation (CPC):
**G06Q 10/107; G06Q 10/04; G06Q 10/20;**
**G06T 7/80;** G06T 2207/10012; G06T 2207/10024;
G06T 2207/10048; G06T 2207/30232

(54) **COMPUTERIMPLEMENTIERTES VERFAHREN, COMPUTERSYSTEM UND COMPUTERPROGRAMM ZUR AUTOMATISIERTEN ÜBERWACHUNG EINER ELEKTRISCHEN SCHALTANLAGE**

COMPUTER-IMPLEMENTED METHOD, COMPUTER SYSTEM AND COMPUTER PROGRAM FOR AUTOMATED MONITORING OF AN ELECTRICAL SWITCHGEAR

PROCÉDÉ MIS EN OEUVRE PAR ORDINATEUR, SYSTÈME INFORMATIQUE ET PROGRAMME INFORMATIQUE DESTINÉS À LA SURVEILLANCE AUTOMATISÉE D'UNE INSTALLATION DE COMMUTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.06.2020   DE 102020115756**

(43) Veröffentlichungstag der Anmeldung:
**22.12.2021   Patentblatt 2021/51**

(73) Patentinhaber:
• **Hesotech GmbH**
  **automatisieren - visualisieren**
  **65582 Diez (DE)**
• **SPIE Operations SAS**
  **95863 Cergy-Pontoise Cedex (FR)**

(72) Erfinder: **Sonnenschein, Roland**
  **65589 Hadamar (DE)**

(74) Vertreter: **Bernsmann, Falk et al**
  **Preusche & Partner Patent- und Rechtsanwälte mbB**
  **Schlossstraße 1**
  **56068 Koblenz (DE)**

(56) Entgegenhaltungen:
**CN-B- 106 451 790     US-A1- 2019 147 655**
**US-B2- 10 445 944**

• **Anonymous: "Data buffer - Wikipedia", , 3. Mai 2020 (2020-05-03), XP055851040, Gefunden im Internet: URL:https://en.wikipedia.org/w/index.php?title=Data_buffer&oldid=954638611 [gefunden am 2021-10-13]**
• **Hartley R. ET AL: "Estimation - 2D Projective Transformations" In: "Multiple View Geomerty in Computer Vision, 2nd edn.", 25. März 2004 (2004-03-25), Cambridge University Press, Cambridge, XP055851098, * Seite 87 - Seite 91 ***

## Beschreibung

### Technisches Gebiet

Die Erfindung betrifft ein computerimplementiertes Verfahren zur automatisierten Überwachung einer elektrischen Schaltanlage und ein Computersystem sowie ein Computerprogramm zur Ausführung des Verfahrens.

### Stand der Technik

Ein sicherer Betrieb elektrischer Schaltanlagen, beispielsweise Umspannwerke, Blindleistungs-Kompensationsanlagen oder Batteriespeicherwerke, erfordert neben der Überwachung rund um die Uhr auch die Wartung und Instandsetzung. Die Schaltanlagen befinden sich in der Regel nicht in Stadtnähe und sind für Wartungs-Teams nur über weite Wege erreichbar.

Ein störungsfreier Betrieb von elektrischen Schaltanlagen wird bisher durch zyklische Wartungen und Inspektionen der Schaltanlage erreicht. Dies ist ressourcenintensiv, teuer und insbesondere in einer Zeit, in der immer weniger technische Fachkräfte zur Verfügung stehen, immer schwieriger umzusetzen.

Die Patentanmeldung US 2019 / 0147655 A1 offenbart ein System und ein Verfahren zur Überwachung eines Sicherheitsbereichs einer Industrieanlage mit erweiterter Realität, das automatisch eine Handlungsempfehlung erzeugt. Dabei werden die Daten in einer Datenbank gespeichert, um die Handlungsempfehlung zu erzeugen. Die Daten werden nicht zuvor in einem lokalen Zwischenspeicher zwischengespeichert, und die Speicherrate des Speicherns in der Datenbank wird nicht angepasst. Daher kann die Handlungsempfehlung erst erstellt werden, wenn eine aufgrund der konstanten Speicherrate große Menge an Daten in der Datenbank gespeichert ist, und nicht direkt aus dem Zwischenspeicher.

Der Artikel https://en.wikipedia.org/wiki/Data_buffer beschreibt allgemein einen Zwischenspeicher zur Zwischenspeicherung von Daten.

Das Patent CN 106451790 A beschreibt ein automatisiertes System und Verfahren zur Überwachung einer Schaltanlage. In dem Verfahren gemäß D4 werden die von der Schaltanlage aufgenommenen Daten von einem lokal in der Schaltanlage angeordneten Analyse-Server analysiert, und die Ergebnisse der Analyse werden von einem lokal in der Schaltanlage angeordneten Überwachungs-Server gespeichert.

### Technische Aufgabe

Die Aufgabe der Erfindung ist es, ein Verfahren und ein System zur effizienten und zuverlässigen Überwachung von elektrischen Schaltanlagen zu schaffen.

### Technische Lösung

Der Gegenstand der vorliegenden Erfindung stellt ein Verfahren gemäß Anspruch 1 bereit, das die technische Aufgabe löst. Ebenso wird die Aufgabe durch ein Computersystem gemäß Anspruch 12 und ein Computerprogramm gemäß Anspruch 13 gelöst. Vorteilhafte Ausgestaltungen ergeben sich aus den abhängigen Ansprüchen.

### Beschreibung der Ausführungsarten

Ein erfindungsgemäßes computerimplementiertes Verfahren zur automatisierten Überwachung einer elektrischen Schaltanlage umfasst zumindest folgende Schritte:

a. synchrones Aufnehmen von visuellen Bilddaten und/oder infraroten Bilddaten eines Überwachungsbereichs der Schaltanlage mit zumindest einer Kamera,

b. bevorzugt Aufnehmen von Hilfsdaten synchron zu den Bilddaten mit einer Anzahl von Hilfssensoren, wobei die Hilfsdaten bevorzugt Betriebsparameter der Schaltanlage, ein mit zumindest einem Mikrofon synchron zu den Bilddaten in dem Überwachungsbereich aufgenommenes Schallspektrum, und/oder Wetterdaten des Überwachungsbereichs umfassen,

c. Erkennen eines Überwachungsobjekts in den visuellen Bilddaten und/oder den infraroten Bilddaten durch eine Recheneinheit;

d. Bestimmen eines Ist-Werts einer Zustandsgröße des Überwachungsobjekts aus den visuellen Bilddaten und/oder den infraroten Bilddaten und bevorzugt aus den Hilfsdaten durch die Recheneinheit

e. Verknüpfen der synchron aufgenommenen visuellen Bilddaten und/oder infraroten Bilddaten und bevorzugt der Hilfsdaten mit dem daraus bestimmten Ist-Wert der Zustandsgröße zu einem Datensatz mit einem gemeinsamen Zeitstempel durch die Recheneinheit,

f. Zwischenspeichern des Datensatzes in einem in der Schaltanlage angeordneten Zwischenspeicher, wobei der Zwischenspeicher als Ringspeicher oder als First-in-First-out-Speicher vordefinierter Länge ausgestaltet ist,

g. Versenden des Datensatzes aus dem Zwischenspeicher an eine Datenbank durch die Recheneinheit,

h. Anpassen einer Speicherrate zum Speichern des Datensatzes durch die Recheneinheit abhängig von dem Ist-Zustand, den visuellen Bilddaten, den infraroten Bilddaten und/oder den Hilfsdaten, wobei die Speicherrate kleiner oder gleich einer Aufnahmerate des Aufnehmens der visuellen Bilddaten, der infraroten Bilddaten und/oder der Hilfsdaten ist,

i. Speichern des Datensatzes mit der Speicherrate in der Datenbank durch die Recheneinheit und

j. Erstellen einer Handlungsempfehlung durch die Recheneinheit basierend zumindest auf dem Ist-Wert der Zustandsgröße durch die Recheneinheit aus dem in dem Zwischenspeicher zwischengespeicherten Datensatz vor dem Speichern des Datensatzes in der Datenbank.

Die elektrische Schaltanlage kann beispielsweise ein Umspannwerk, eine Blindleistungs-Kompensationsanlagen oder ein Batteriespeicherwerk sein.

Der Übersichtlichkeit halber ist in dieser Beschreibung von "einem" Überwachungsobjekt und von "einer" Zustandsgröße die Rede. Selbstverständlich ist das erfindungsgemäße Verfahren auch auf mehrere Überwachungsobjekte und/oder mehrere Zustandsgrößen anwendbar.

Die zumindest eine Kamera umfasst vorzugsweise zumindest eine Schwenk-Neige-Kamera (sogenannte Pan-Tilt-Kamera oder PT-Kamera) und/oder eine Schwenk-Neige-Zoom-Kamera (sogenannte Pan-Tilt-Zoom-Kamera oder PTZ-Kamera). Daraus ergibt sich der Vorteil, das mit einer geringen Anzahl von Kameras ein großer Überwachungsbereich überwacht werden kann.

Neben dem für Menschen sichtbaren Bereich (VIS) des elektromagnetischen Spektrums, kann die zumindest eine Kamera auch zur Aufnahme von Bilddaten im nahen Infrarotbereich (NIR: ca. 1 µm Wellenlänge) ausgelegt sein, um mit einem entsprechenden Infrarotscheinwerfer Nachtsicht-Aufnahmen zu ermöglichen. Wenn das thermische Verhalten (z.B. Oberflächentemperatur eines Transformatoren-Mantels oder Temperaturen von Kontaktstellen) von Interesse ist, kann die zumindest eine Kamera auch dazu ausgelegt sein, die thermische Abstrahlung eines Körpers im fernen Infrarotbereich (FIR: ca. 10 µm Wellenlänge) aufzunehmen.

Zur Aufnahme von Wärmebildern werden im erfindungsgemäßen Verfahren vorzugsweise Multispektral-PTZ-Kameras (VIS + NIR + FIR) verwendet.

Der Überwachungsbereich kann einen Innenbereich in einem Gebäude der Schaltanlage und/oder einen Außenbereich im Freien umfassen.

Die Hilfssensoren umfassen vorzugsweise eine Wetterstation zur Messung der Wetterdaten. Die Wetterdaten umfassen beispielsweise eine Umgebungshelligkeit, eine Umgebungstemperatur, eine Windstärke, eine Windrichtung, eine Niederschlagsart und/oder eine Niederschlagsstärke in dem Überwachungsbereich.

Die Hilfssensoren umfassen vorzugsweise zumindest ein Mikrofon zur Messung des Schallspektrums, wobei das zumindest eine Mikrofon vorzugsweise ein Richtmikrofon ist, das in dem Verfahren von der Recheneinheit auf das Überwachungsobjekt ausgerichtet werden kann. Das zumindest eine Mikrofon ist beispielsweise in die zumindest eine Kamera integriert, um ein besonders einfach aufgebautes System zu erhalten.

Das Mikrofon kann zum Beispiel dazu verwendet werden, das von einem Leistungsschalter abgegebene Schallspektrum aufzunehmen. Der zeitliche Verlauf des Schalldrucks oder dessen Frequenzverlauf (ermittelt via Fourier-Analyse) können von Schaltung zu Schaltung verglichen werden, um daraus Rückschlüsse auf das Verschleißverhalten des Schalters zu ziehen. Vorteilhaft ist es dabei, wenn durch eine Pre-Trigger-Funktion nur dann Messdaten aufgezeichnet werden, wenn ein Schaltvorgang des Leistungsschalters erkannt wurde.

Die Hilfssensoren müssen räumlich nicht in der Schaltanlage liegen. Die Wetterdaten können beispielsweise auch über eine benachbarte öffentliche Wetterstation bezogen werden.

Das Überwachungsobjekt ist vorzugsweise eine Komponente oder Teil-Komponente der Schaltanlage, beispielsweise ein Transformator, ein Schaltkontakt, oder eine Anzeigevorrichtung, oder ein Lebewesen, beispielsweise ein Mensch, ein Tier oder eine Pflanze, in dem Überwachungsbereich. Im Sine eines Asset-Management-Systems kann die Komponente der Schaltanlage ein "Asset" und die Teil-Komponente eine "Sub-Asset" sein. Das Überwachungsobjekt kann somit ein Asset oder ein Sub-Asset der Schaltanlage sein.

Die hierarchische Struktur von Assets und Sub-Assets kann in einen logischen Baum abgebildet werden. Jeder Knoten des Baums besitzt einen Namen und die Position ist eindeutig durch den Pfad zur Wurzel definiert. Dies ist äquivalent zur Verzeichnisstruktur einer Festplatte. Es gibt einfache Assets (≙ Dokument), die keine Kinder besitzen. Und es gibt Assets, die aus Sub-Assets bestehen (≙ Ordner).

Es besteht ein gewaltiges Innovationspotential darin, mit moderner IT-Technologie den Zugriff auf die Asset-Daten bezüglich der Gesichtspunkte Transparenz, Selektivität, Geschwindigkeit und Qualität zu optimieren. Aus den permanent auflaufenden Daten (Assets und Umwelt) können im Rahmen des Verfahrens in nahezu Echtzeit Schlussfolgerungen mit Handlungsempfehlungen generiert werden, um die Prozesse zu optimieren.

Die Betriebsparameter der Schaltanlage können beispielsweise eine von der Schaltanlage, der Komponente oder der Teil-Komponente übertragene Leistung, Stromstärke und/oder Spannung und/oder einen Schaltzustand der Schaltanlage, der Komponente oder der Teil-Komponente umfassen.

Die Zustandsgröße kann beispielsweise eine Oberflächentemperatur einer Komponente der Schaltanlage, insbesondere eines Transformators oder eines Schaltkontakts, sein, die zu Beispiel aus den infraroten Bilddaten der Komponente bestimmt wird. Infrarote (FIR) Bilddaten können beispielsweise zur Detektion eines Brandherds innerhalb oder außerhalb der Schaltanlage, zur Detektion von Eindringlingen oder zur Überwachung der Temperaturverteilung im Öl eines Transformators genutzt werden.

Die Zustandsgröße kann beispielsweise die Anwesenheit oder Abwesenheit einer Komponente der Schaltanlage, von Abfall, Rauch oder Feuer, eines Menschen oder eines Tieres in dem Überwachungsbereich sein, die zum Beispiel aus den visuellen und/oder infraroten (FIR) Bilddaten des Überwachungsbereichs bestimmt wird. Aus der Abwesenheit einer Komponente der Schaltanlage kann zum Beispiel ein Diebstahl detektiert werden um daraus beispielsweise die Handlungsanweisung zu erstellen, die Schalanlage zu deaktivieren, falls eine sicherheitsrelevante Komponente wie eine Erdungsanlage gestohlen wurde.

Die Zustandsgröße kann beispielsweise ein von einer Komponente der Schaltanlage, beispielsweise von einem Motor, abgegebenes Schallspektrum oder der abgegebene Schalldruck sein.

Die Zustandsgröße kann beispielsweise eine Wuchshöhe einer Pflanze in dem Überwachungsbereich sein, die zum Beispiel aus den visuellen Bilddaten des Überwachungsbereichs bestimmt wird.

Die Zustandsgröße kann beispielsweise eine Zustandsgröße sein, deren Ist-Wert durch eine, insbesondere analoge, Anzeigevorrichtung der Schaltanlage angezeigt wird, sodass der Ist-Wert aus den visuellen Bilddaten der Anzeigevorrichtung bestimmt werden kann. Die Anzeigevorrichtung kann beispielsweise einen Farbindikator, zum Beispiel ein Silikagel, umfassen. Das Silikagel kann zum Beispiel durch seine Farbe als Zustandsgröße die verbleibende Aufnahmekapazität des Silikagels zur Feuchtigkeitsaufnahme zum Schutz eines Maschinenöls der Schaltanlage vor Feuchtigkeit anzeigen. So können viele Sichtkontrollen der Schaltanlage direkt aus einer entfernten Netzleitstelle erfolgen, ohne dass jemand die weiten Strecken zur Schaltanlage zurücklegen muss.

Aus der in dem Verfahren detektierten Farbe eines Silikagels kann beispielsweise die Handlungsempfehlung erstellt werden, das Silikagel bei Verfärbung von orange zu braun zu tauschen, um ein Transformator-Öl vor Feuchtigkeit zu schützen. Die Prüfung des Silikagels mussten bisher Techniker vor Ort vornehmen. Aus diesen nur punktuellen Prüfungen konnte außerdem kein Verlauf abgeleitet werden, der eine Vorhersage ermöglichen würde, wann das Silikagel in Zukunft getauscht werden müsste.

Durch das Verknüpfen der Daten zu einem Datensatz mit einem gemeinsamen Zeitstempel und Speichern des Datensatzes in einer Datenbank wird sichergestellt, dass die Daten zu einem späteren Zeitpunkt analysiert werden können, wobei der zeitliche Zusammenhang zwischen den Daten erhalten bleibt. Dadurch können die aus unterschiedlichen Quellen gewonnenen Daten sinnvoll miteinander kombiniert werden, um die Zustandsgröße zu bestimmen oder die Handlungsempfehlung zu erstellen. Weiterhin können mit dem zeitlichen Zusammenhang Korrelationen zwischen den Daten aufgedeckt werden, die beispielsweise zur Prognose eines Zukunfts-Werts der Zustandsgröße genutzt werden können.

Detektiert die Recheneinheit beispielsweise, dass ein Eindringling eine Linie überschreitet oder in einen geschlossenen Bereich eindringt, kann die Recheneinheit einen Alarm generieren und diesen zusammen mit gleichzeitig aufgenommenen Bilddaten in einem Datensatz speichern. Einem Alarm können dabei prinzipiell beliebig viele Daten aus unterschiedlichen Quellen, beispielsweise Bilddaten von unterschiedlichen Kameras, zugeordnet werden. Diese Funktionalität bietet eine enorme Arbeitserleichterung und Zeitersparnis: Bei der Auflistung der Alarme kann beispielsweise ein Filter gesetzt werden, der nur Eindringlinge einer bestimmten Überschreitungslinie anzeigt. Dann können auf Knopfdruck alle Überschreitungen dieser Linie in Form der gespeicherten Bilddaten angezeigt werden. In der bisherigen Technik müssten dazu zuerst die einzelnen Zeitpunkte der Alarme herausgesucht und dann in das getrennte Videosystem eingegeben werden.

In dem Datensatz bilden beispielsweise die visuellen Bilddaten, die infraroten Bilddaten und jede Art von Hilfsdaten jeweils einen Kanal, dem vorzugsweise jeweils ein eindeutiges Identifikationsmerkmal, insbesondere ein Konfigurations-Identifikationsmerkmal, zugeordnet ist. Mit Hilfe des Identifikationsmerkmals kann auch dann zuverlässig auf die jeweils gewünschten Daten zugegriffen werden, wenn es im Laufe der Überwachung der Schaltanlage zu Konfigurations-Änderungen kommt, bei denen beispielsweise Kanäle hinzugefügt oder entfernt werden. Das kann beispielsweise geschehen, wenn an der Schaltanlage zusätzliche Kameras oder Hilfssensoren installiert werden, oder wenn bestehende Kameras oder Hilfssensoren ausgetauscht werden. Der zeitige Gültigkeitsbereich jeder Konfiguration wird vorzugsweise gespeichert.

Der Zeitstempel wird vorzugsweise als koordinierte Weltzeit (UTC) gespeichert, um Mehrdeutigkeiten, beispielsweise durch eine Umstellung zwischen Sommerzeit und Normalzeit oder durch die Überwachung von mehreren Schaltanlagen in unterschiedlichen Zeitzonen, zu vermeiden. Eine Umrechnung in Lokalzeit kann mit dem Abrufen der Daten zur Ausgabe auf einem Anzeigemittel in dessen Zeitzone stattfinden. Bei Bedarf kann auch in eine beliebige andere Zeitzone (z.B. die Zeitzone der Schaltanlage) umgerechnet werden.

Die Recheneinheit kann zumindest ein beliebiges Computergerät, beispielsweise ein Einplatinen-Computer, ein Smartphone, ein Tablet-, Laptop- oder Desktop-Computer, ein physischer oder virtueller Server oder eine Server-Farm, sein. Das Verfahren ist vorzugsweise skalierbar, sodass es von unterschiedlich dimensionierten Recheneinheiten ausgeführt werden kann. Die Recheneinheit kann mehrere, insbesondere räumlich voneinander entfernte, Computergeräte umfassen.

Eine Recheneinheit kann mehrere Schaltanlagen unabhängig voneinander verwalten. Die Informationen der Schaltanlagen sind vorzugsweise aus Sicht der IT-Sicherheit voneinander getrennt. Einzelne Schritte des Verfahrens können von unterschiedlichen Recheneinheiten ausgeführt werden. So kann beispielsweise die Bildauswertung auf einem dafür spezialisierten Server laufen. Auch ist es oft sinnvoll, die Bilddaten auf einem eigenen Speicher-Server abzulegen.

Die Recheneinheit kann innerhalb der Schaltanlage oder davon entfernt angeordnet sein. Die Recheneinheit kann mit der zumindest einen Kamera, den Hilfssensoren und/oder der Datenbank über ein kabelloses und/oder kabelgebundenes Computernetzwerk, insbesondere über das Internet und/oder ein virtuelles privates Netzwerk (VPN), verbunden sein.

Die Datenbank kann in der Recheneinheit integriert oder separat davon, insbesondere räumlich davon entfernt, sein. Die Datenbank kann an einem Ort räumlich lokalisiert oder an mehreren Orten räumlich verteilt sein. Die Datenbank kann insbesondere in einem Cloud-Speicher abgelegt sein.

Wenn der Ist-Wert der Zustandsgröße auf eine Fehlfunktion der Schaltanlage hindeutet, beispielsweise, weil eine Oberflächentemperatur eines Transformators eine Grenztemperatur überschreitet, kann die Handlungsempfehlung beispielsweise lauten, eine Prüfung oder Wartung der Schaltanlage durchzuführen.

Wenn der Ist-Wert der Zustandsgröße auf eine Gefahr für die Schaltanlage oder deren Umgebung hindeutet, beispielsweise, weil ein Brand detektiert wird, kann die Handlungsempfehlung beispielsweise lauten, einen Rettungsdienst zu alarmieren und/oder die Schaltanlage abzuschalten.

Wenn der Ist-Wert der Zustandsgröße auf eine einwandfreie Funktion der Schaltanlage hindeutet, beispielsweise, weil nichts Außergewöhnliches detektiert wird, kann die Handlungsempfehlung beispielsweise lauten, momentan nichts zu unternehmen.

Durch das Verfahren können Serviceeinsätze reduziert werden. Dies wird zum Beispiel in der Pflege einer Außenanlage der Schaltanlage deutlich. Statt einen Rasen oder andere Pflanzen regelmäßig zu schneiden, kann das Verfahren eine Handlungsempfehlung zum Rückschnitt ausgeben, sobald es in den visuellen Bilddaten erkennt, dass die Pflanzen der Außenanlage eine vorbestimmte Größe erreicht haben.

Bei der Erstellung der Handlungsempfehlung kann das Verfahren berücksichtigen, wann welche Arbeiten in welcher Schaltanlage geplant sind, um den effizientesten Einsatz der Servicetechniker vorzubereiten. Dazu bezieht es beispielsweise Onlineinformationen wie Wetterberichte der Region mit ein, sodass die Netzleitstelle keine Abschaltungen eines Umspannwerks einer Windkraftanlage an besonders windreichen Tagen plant.

Das Verfahren umfasst vorzugsweise ein Ermitteln eines Soll-Werts der Zustandsgröße durch die Recheneinheit, wobei das Erstellen der Handlungsempfehlung ein Vergleichen des Ist-Werts mit dem Soll-Wert durch die Recheneinheit umfasst.

Der Soll-Wert der Zustandsgröße kann beispielsweise durch ein Abrufen eines statischen oder dynamischen Soll-Werts aus einer Datenbank ermittelt werden.

Die Art der Handlungsempfehlung hängt vorzugsweise davon ab, ob und insbesondere wie weit der Ist-Wert von dem Soll-Wert abweicht. Wenn der Ist-Wert - insbesondere unter Berücksichtigung eines Toleranzbereichs - mit dem Soll-Wert übereinstimmt, ist in der Regel kein Handlungsbedarf gegeben, so dass die Handlungsempfehlung beispielsweise lauten könnte, aktuell nichts zu unternehmen. Durch eine Trend-Analyse des zeitlichen Verlaufs des Ist-Werts wird vorzugsweise vorhergesagt, wenn der Ist-Wert den Toleranzbereich verlassen wird. Dadurch kann die Handlungsempfehlung lauten, eine Wartung in einem bestimmten Zeitintervall in der Zukunft durchzuführen, wenn der Ist-Wert voraussichtlich den Toleranzbereich verlassen wird.

Bei einer Abweichung des Ist-Werts von dem Soll-Wert kann die Handlungsempfehlung beispielsweise je nach Größe der Abweichung lauten, eine Ferndiagnose der Schaltanlage durchzuführen, eine Prüfung, Pflege, Wartung oder Reparatur der Schaltanlage vor Ort durchzuführen, die Schaltanlage außer Betrieb zu setzen, einen Alarm auszulösen oder einen Rettungsdienst zu benachrichtigen.

Das Ermitteln des Soll-Werts der Zustandsgröße umfasst vorzugsweise ein Einbeziehen der visuellen Bilddaten, der infraroten Bilddaten, und/oder der Hilfsdaten. Beispielsweise kann bei dem Ermitteln des Soll-Werts einer aus den infraroten (FIR) Bilddaten einer Komponente bestimmten Oberflächentemperatur der Komponente die von der Komponente übertragene Stromstärke, die Umgebungstemperatur, die Windstärke, die Windrichtung, die Niederschlagsart, die Niederschlagsstärke und/oder eine Sonneneinstrahlung einbezogen werden. Die Sonneneinstrahlung kann beispielsweise aus den visuellen Bilddaten der Komponente und/oder aus einem aus Datum und Uhrzeit bestimmten Sonnenstand in Kombination mit einer von der Wetterstation bestimmten Umgebungshelligkeit ermittelt werden.

Das Verfahren umfasst vorzugsweise ein Versenden der Handlungsempfehlung durch die Recheneinheit und/oder ein Speichern der Handlungsempfehlung durch die Recheneinheit in einer Datenbank. Dadurch kann ein Benutzer der Schaltanlage informiert werden und/oder die Handlungsempfehlung kann zur Qualitätssicherung dokumentiert werden.

Das Verfahren umfasst ein Zwischenspeichern des Datensatzes in einem in der Schaltanlage angeordneten Zwischenspeicher und ein Versenden des Datensatzes aus dem Zwischenspeicher an die Datenbank durch die Recheneinheit. Dadurch können die Daten auch bei Verbindungsproblemen zwischen der zumindest einen Kamera, den Hilfssensoren und der Datenbank zuverlässig mit dem korrekten Zeitstempel gespeichert werden. Sobald die Verbindungsprobleme behoben sind, können die Daten an die Datenbank gesendet und dort gespeichert werden, sodass der Zwischenspeicher nur eine geringe Speicherkapazität benötigt. Ferner entkoppelt der Zwischenspeicher die Aufnahme der Daten von der Speicherung der Daten in die Datenbank, sodass die Gefahr eines Systemabsturzes bei kurzzeitig auftretenden Problemen auf der Eingangs- oder Ausgangsseite des Zwischenspeichers minimiert wird.

Der Zwischenspeicher ist als Ringspeicher oder als First-in-First-out-Speicher (FIFO-Speicher) vordefinierter Länge ausgestaltet. Die folgenden Ausgestaltungen und Vorteile werden der Klarheit halber nur am Beispiel des Ringspeichers beschrieben, können sich erfindungsgemäß aber auch auf den FIFO-Speicher beziehen. In dem Ringspeicher kann eine große Menge von aufgenommenen visuellen Bilddaten, infraroten Bilddaten und Hilfsdaten schnell und effizient zwischengespeichert werden. In Kombination mit einem paketierten, objektorientierten und hierarchischen Speichern kann mit dem Ringspeicher beispielsweise ein um einen Faktor 1000 schnelleres Speichern erreicht werden als mit bekannten Verfahren. Für das erfindungsgemäße Verfahren bietet ein als Ringspeicher ausgestalteter Zwischenspeicher insbesondere folgende Vorteile:

In dem Ringspeicher können die aufgenommenen Daten in Echtzeit zwischengespeichert und mit einem korrekten Zeitstempel zu Datensätzen verknüpft werden. Dadurch kann die Datenbank ohne Genauigkeitsverlust als übliche nicht echtzeitfähige Datenbank ausgestaltet sein.

Der Ringspeicher erlaubt eine Batch-Verarbeitung der aufgenommenen Daten und ein gemeinsames Speichern mehrerer Datensätze in die Datenbank, wodurch sich die Anzahl der Datenbank-Transaktionen verringert. Da die Speicherleistung einer Datenbank in der Regel durch die maximale Anzahl von pro Zeiteinheit durchführbaren Transaktionen begrenzt ist, ist das gemeinsame Speichern mehrerer Datensätze schneller als ein einzelnes Speichern der Datensätze.

Mit dem Ringspeicher kann das Bestimmen des Ist-Werts der Zustandsgröße und/oder eine Berechnen von Metadaten aus den aufgenommenen Daten noch vor dem Speichern in der Datenbank ("online") durchgeführt werden. Dadurch kann auch die Handlungsempfehlung online erstellt und besonders schnell an einen Benutzer übermittelt werden, was insbesondere dann wichtig ist, wenn die Handlungsempfehlung, beispielsweise bei einem Feueralarm oder einem Eindringlingsalarm, ein sofortiges Handeln erfordert. Ferner können auch Ereignisse, die den Ablauf des Verfahrens beeinflussen, online generiert werden.

Da in dem Ringspeicher jederzeit noch die vollständigen aufgenommenen Daten aus einem Zeitintervall in der Vergangenheit vorhanden sind, kann mit dem Ringspeicher eine Speicherrate in die Datenbank von kurz vor einem auslösenden Ereignis aufgenommenen Daten angepasst werden (sogenannter "Pre-Trigger"). So kann beispielsweise ein Ist-Wert, der auf eine Fehlfunktion der Schaltanlage hindeutet, der Auslöser dafür sein, dass die Speicherrate in die Datenbank von Daten, die kurz vor dem Auftreten der Fehlfunktion aufgenommen wurden, erhöht wird, um die Ursache der Fehlfunktion genauer analysieren zu können.

Das Speichern des Datensatzes umfasst vorzugsweise ein Paketieren mehrerer Datensätze mit aufeinanderfolgenden Zeitstempeln zu einem Datenpaket, ein Berechnen von dem Datenpaket zugeordneten Metadaten aus den zu dem Datenpaket paketierten Daten und ein Speichern der Metadaten in der Datenbank.

Die Metadaten können beispielsweise einen Anfangs-Zeitstempel des Datenpakets, einen End-Zeitstempel des Datenpakets, eine Dauer vom Anfang bis zum Ende des Datenpakets und/oder statistische Kennzahlen der einzelnen Kanäle des Datenpakets, beispielsweise ein Minimum, ein Maximum und/oder einen Mittelwert, umfassen.

Die Metadaten werden bevorzugt auf einem Speichermedium mit einer kürzeren Zugriffszeit gespeichert als die Datensätze. Beispielsweise können die Metadaten in einem Festkörperspeicher (Solid-State-Drive) und die Datensätze auf einer magnetischen Festplatte gespeichert werden. Dadurch wird ein schneller Zugriff auf die häufiger benötigten Metadaten ermöglicht, während die Gesamtkosten zur Speicherung von Datensätzen und Metadaten gering gehalten werden.

Das Verfahren umfasst vorzugsweise ein Abrufen von Daten, deren Zeitstempel in einem Zeitintervall liegt, aus der Datenbank durch die Recheneinheit, wobei bei einer Länge des Zeitintervalls bis zu einer Grenzlänge Daten der Datensätze, deren Zeitstempel in dem Zeitintervall liegt, abgerufen werden und bei einer Länge des Zeitintervalls oberhalb der Grenzlänge nur die Metadaten der Datenpakete, deren Zeitstempel in dem Zeitintervall liegt, abgerufen werden.

Hinter diesen Strategien steckt die Überlegung, dem Bediener nur die Daten zu übermitteln, die er in der aktuellen Situation nutzen kann. Ein normaler Bildschirm hat beispielsweise in der Breite eine Auflösung von 1920 Pixel.

Es ergibt daher keinen Sinn, für eine Chart-Darstellung mehr als 1920 Messpunkte zu senden. Die maximale Anzahl der erwarteten Messpunkte kann deshalb bei der Anfrage mit übergeben werden. Der gesamte abgefragte Zeitraum wird dann in 1920 gleichmäßige ZeitIntervalle aufgeteilt. Alle Messdaten in der Abfrage werden entsprechend ihrem Zeitstempel einem Zeit-Intervall zugeordnet und aggregiert.

Bei sehr großen Abfrageintervallen wird gleich auf die Metadaten zugegriffen. Bei kleinen Abfrageintervallen auf die Detail-Daten. Dies wird vorzugsweise von einer dem Datensatz zugeordneten Abfragestrategie gesteuert. Die Abfragestrategie kann in den Metadaten des Datensatzes gespeichert sein.

Durch die Metadaten können aus einer verringerten Datenmenge schneller und mit geringerem Übertragungsaufwand und Verarbeitungsaufwand erste Analysen und/oder Visualisierungen der Daten erzeugt werden als mit den zu Grunde liegenden Datensätzen. Andererseits liegen in einem kurzen Zeitintervall möglicherweise nicht genügend Metadaten für eine aussagekräftige Analyse und/oder Visualisierung. Daher ist es vorteilhaft, bei einer Länge des Zeitintervalls bis zu der Grenzlänge auf die Datensätze zurückzugreifen.

Die Grenzlänge ist bevorzugt so gewählt ist, dass die abgerufenen Daten oder Metadaten von einem Anzeigemittel, beispielsweise einem Bildschirm, vollständig angezeigt werden können. Dadurch werden für eine Visualisierung keine Daten abgerufen, die nicht dargestellt werden können und daher keine Informationsgewinn bringen.

Das Verfahren umfasst vorzugsweise ein Abrufen von Daten, deren Zeitstempel in einem Zeitintervall liegt, aus der Datenbank durch die Recheneinheit, wobei das Abrufen ein Aggregieren der Daten zur Reduzierung der abgerufenen Datenmenge umfasst. Das Aggregieren kann beispielsweise ein Auswählen zumindest einer statistischen Kenngröße, insbesondere eines Mittelwerts, einer Varianz, eines Maximums und/oder eines Minimums, der Daten umfassen.

Das Aggregieren kann ebenso wie das zuvor beschriebene Abrufen der Metadaten eine nachfolgende Übertragung, Verarbeitung und/oder Anzeige der Daten vereinfachen. Erfindungsgemäß können das Aggregieren und das Abrufen der Metadaten miteinander kombiniert werden.

Das Aggregieren ist bevorzugt so ausgestaltet, dass die aggregierten Daten von einem Anzeigemittel, beispielsweise einem Bildschirm, vollständig angezeigt werden können

Im Rahmen des Verfahrens können auch die Datenpakete analog zu den Datensätzen zu Datenpaketpaketen mit Paketmetadaten paketiert werden und gegebenenfalls so weiter, sodass eine hierarchische Datenbank mit mehreren Hierarchieebenen aus Datensätzen, Metadaten, Paketmetadaten und gegebenenfalls so weiter entsteht. Dadurch ergeben sich vielfältige Möglichkeiten, für eine Analyse und/oder Visualisierung jeweils die Daten aus der am besten geeigneten Hierarchieebene auszuwählen, um ein optimales Verhältnis von erzieltem Informationsgewinn zu notwendigem Übertragungsaufwand und Verarbeitungsaufwand zu erzielen.

Das Verfahren umfasst ein Anpassen einer Speicherrate des Speicherns des Datensatzes durch die Recheneinheit abhängig von dem Ist-Zustand, den visuellen Bilddaten, den infraroten Bilddaten und/oder den Hilfsdaten, wobei die Speicherrate kleiner oder gleich einer Aufnahmerate des Aufnehmens der visuellen Bilddaten, der infraroten Bilddaten und/oder der Hilfsdaten ist.

Beispielsweise kann bei einer Abweichung des Ist-Zustands von dem Soll-Zustand eine höhere Speicherrate eingestellt werden, als wenn keine Abweichung vorliegt, um eine umfassende Diagnose und Dokumentation im Umfeld der Abweichung zu erlauben, ohne insgesamt unnötig viele Daten zu speichern.

Weiterhin könnte die Speicherrate der visuellen Bilddaten erhöht werden, wenn ein Eindringling oder ein anderes außergewöhnliches Ereignis in den visuellen Bilddaten detektiert wird oder wenn Betriebsparameter der Schaltanlage einen erhöhten Überwachungsbedarf erzeugen, beispielsweise weil ein von der Schaltanlage übertragene Leistung nahe einer vordefinierten Maximalleistung der Schaltanlage liegt.

Das Speichern umfasst vorzugsweise ein objektorientiertes binäres Speichern, wobei die Datenbank eine objektrelationale Datenbank, beispielsweise eine PostgreSQL-Datenbank, umfasst. Dabei kann beispielsweise das Identifikationsmerkmal eines Kanals des Datensatzes ein Pfad in einer JSON-Struktur sein. Das objektorientierte Speichern in einer objektrelationalen Datenbank erlaubt einen problemlosen Zugriff auf die Daten mit einem in einer objektorientierten Programmiersprache geschriebenen Programm. Das binäre Speichern führt zu einem minimalen Speicherbedarf ohne Genauigkeitsverlust.

Das Erkennen des Überwachungsobjekts und/oder das Bestimmen des Ist-Werts der Zustandsgröße des Überwachungsobjekts umfasst vorzugsweise ein Anwenden von Computer Vision auf die infraroten und/oder visuellen Bilddaten. Als Computer Vision werden im Sinne der Erfindung Methoden der automatischen Objekterkennung und Quantifizierung in Bilddaten mit Hilfe lernfähiger Algorithmen verstanden, beispielsweise um Abmessungen oder Färbungen eines Objekts zu vermessen. Computer Vision kann Machine Learning umfassen. Beim Machine Learning werden viele Bilder von einem Menschen bewertet. Das Programm versucht dann selbständig durch interne Verknüpfungen den Zusammenhang zwischen Bild und Bewertung herzustellen. Kommt dann später eine neues Bild hinzu, wird es mit dem Gelernten vom Verfahren automatisch bewertet.

Computer Vision ist von Machine Vision zu unterscheiden, bei der lediglich ein automatischer Soll-Ist-Abgleich von Bilddaten stattfindet, beispielsweise um die Anwesenheit eines bekannten Gegenstands an einem vorgesehenen Ort zu prüfen.

Vorzugsweise umfasst das Ermitteln des Soll-Werts der Zustandsgröße des Überwachungsobjekts ein Anwenden von Computer Vision auf zu einem früheren Zeitpunkt als die dem Ist-Wert der Zustandsgröße zu Grunde liegenden Daten aufgenommene infrarote und/oder visuelle Bilddaten des Beobachtungsobjekts. Auf diese Weise können Veränderungen des Überwachungsobjekts, insbesondere auch langsame und/oder vorübergehende Veränderungen, die bei einer konventionellen Kamera-Überwachung leicht übersehen werden, zuverlässig detektiert werden.

Das Aufnehmen der visuellen und/oder der infraroten Bilddaten umfasst vorzugsweise ein Aufnehmen von mosaikartigen, überlappenden Einzelbildern des gesamten Überwachungsbereichs in mehreren Vergrößerungsstufen in regelmäßigen Zeitabständen durch die zumindest eine Kamera; ein Zusammensetzen der Einzelbilder eines Zeitpunktes zu jeweils einem Gesamtbild mit mehreren Ebenen, die den Vergrößerungsstufen entsprechen, durch die Recheneinheit, wobei die Einzelbilder einer Ebene an den Bildern der Ebene der jeweils nächstgeringeren Vergrößerungsstufe ausgerichtet werden, und ein Speichern der Gesamtbilder durch die Recheneinheit in dem Zwischenspeicher.

Ein solches Aufnehmen erlaubt eine besonders umfassende und effiziente Überwachung der Schaltanlage. Mögliche Ausgestaltungen und Vorteile eines solchen Aufnehmens sind in der Patentanmeldung EP 3 236 440 A1 beschrieben.

Das Vergleichen des Ist-Werts mit dem Soll-Wert umfasst vorzugsweise ein Vergleichen der visuellen und/oder infraroten Ist-Gesamtbilder mit den Soll-Gesamtbildern, wobei das Vergleichen der Gesamtbilder zunächst auf der Ebene geringster Vergrößerung erfolgt und in Ebenen höherer Vergrößerung nur Bereiche untersucht werden, die bereits bei geringerer Vergrößerung Unterschiede zeigen, und/oder durch automatische Bewegungserkennung und/oder Bewegungsquantifizierung erfolgt, wobei bevorzugt Methoden der Computer Vision eingesetzt werden. Dadurch ist das Vergleichen besonders effizient und zuverlässig.

Das Aufnehmen der visuellen und/oder der infraroten Bilddaten erfolgt vorzugsweise durch zumindest zwei Kameras aus unterschiedlichen Blickwinkeln, wobei die Recheneinheit ein Berechnen einer dreidimensionalen Darstellung des Beobachtungsbereichs aus den Bildern der Kameras durchführt.

Mit Hilfe der dreidimensionalen Darstellung ist eine besonders anschauliche Überwachung der Schaltanlage durch einen Benutzer des Verfahrens, insbesondere in Form einer virtuellen Begehung der Schaltanlage, möglich. Dabei kann dem Benutzer beispielsweise der Ist-Wert und/oder der Soll-Wert der Zustandsgröße, eine Differenz aus Ist-Wert und Soll-Wert oder ein historischer Verlauf von Ist-Werten der Zustandsgröße an einer Darstellung des zugehörigen Überwachungsobjekts angezeigt werden.

Das Verfahren umfasst vorzugsweise ein Prognostizieren eines prognostizierten Zukunfts-Werts der Zustandsgröße des Überwachungsobjekts für einen Ziel-Zeitpunkt durch die Recheneinheit auf Basis eines aktuellen Ist-Werts der Zustandsgröße unter Einbeziehung von historischen Vergangenheits-Werten der Zustandsgröße und/oder von aktuellen, historischen und/oder prognostizierten Bilddaten, Hilfsdaten und/oder weiteren Zustandsgrößen.

Die Hilfsdaten können tatsächliche aktuelle und/oder historische Betriebsparameter, prognostizierte Betriebsparameter und/oder von einem Benutzer des Verfahrens gewählte Betriebsparameter umfassen. Vom Benutzer gewählte Betriebsparameter erlauben es, durch das Prognostizieren einen zukünftigen Zustand der elektrischen Schaltanlage für unterschiedliche Betriebsszenarien zu simulieren, um besonders vorteilhafte Betriebsparameter zu ermitteln.

Prognostizierte Hilfsdaten und/oder Betriebsparameter können im Rahmen des Verfahrens analog zu prognostizierten Zukunfts-Werten der Zustandsgröße prognostiziert werden, von einem Benutzer gewählt werden und/oder aus einer externen Datenbank, beispielsweise einer Datenbank für Wetterprognosen, abgerufen werden.

Das Verfahren kann eine vorausschauende Instandhaltung basierend auf einer prognostizierten Zustandsgröße umfassen. Dadurch ist es möglich, Instandhaltungsarbeiten nicht nach festen Zeitintervallen, sondern nach Bedarf auszuführen. Die prognostizierte Zustandsgröße kann dabei beispielsweise eine Wuchshöhe von Rasen oder anderen Pflanzen einer Grünanlage, einen Wasserstand einer Transformatorenwanne, eine Ölverschmutzung unterhalb von Schaltern in einem Schaltwerk und/oder einen Verschleiß von elektrischen Trennern oder Schaltern umfassen. Der Verschleiß wird von einem sich langsam erhöhenden Übergangswiderstand des jeweiligen Kontakts verursacht werden. Der erhöhte Übergangswiderstand kann durch eine erhöhte thermische Abstrahlung detektiert werden.

Für die vorausschauende Instandhaltung wird aus der prognostizierten Zustandsgröße beispielsweise eine Rest-Lebensdauer, ein Lebensdauer-Verbrauch und/oder eine verbleibende Zeit zur erforderlichen Wartung des Überwachungsobjekts und/oder eine Zeit bis zur Alarmierung eines Benutzers berechnet.

Das Verfahren umfasst vorzugsweise ein Ablegen des Zukunfts-Werts der Zustandsgröße in der Datenbank durch die Recheneinheit, ein Abgleichen des Zukunfts-Werts mit einem basierend auf einem anderen Ist-Wert prognostizierten Zukunfts-Wert der Zustandsgröße mit dem gleichen Ziel-Zeitpunkt wie der Zukunfts-Wert und/oder mit dem Ist-Wert der Zustandsgröße zum Ziel-Zeitpunkt des Zukunfts-Werts durch die Recheneinheit und ein Optimieren des Prognostizierens basierend auf dem Ergebnis des Abgleichens durch die Recheneinheit.

Wenn der Zukunfts-Wert in der Datenbank abgelegt wird, kann er ebenso weiterverarbeitet werden wie der Ist-Wert der Zustandsgröße. Der Zukunfts-Wert kann insbesondere dem Datensatz hinzugefügt werden, der den Zeitstempel des Ziel-Zeitpunkts des Zukunfts-Werts trägt. Somit kann der Zukunfts-Wert besonders einfach mit dem zugehörigen Ist-Wert verglichen werden, um das Prognostizieren zu optimieren.

Sind beispielsweise für ein Umspannwerk für aus Windenergie gewonnenen Strom Wartungsarbeiten geplant, die eine Abschaltung erfordern, wird dazu häufig der Wetterbericht hinzugezogen. Ziel ist es dabei, die Abschaltung in eine Flaute zu legen. Ist zum Zeitpunkt der Abschaltung aber ein starker Wind, so sollen Prognosedaten als Entscheidungsgrundlagen transparent in einem Chart dargestellt werden können. Die Prognosen werden aber umso besser, je näher man ans Zieldatum kommt. Prinzipiell möchte man täglich den aktuellen Wetterbericht einarbeiten und auch sehen, wie die Prognosen für das Zieldatum sich verändern. Dies läuft auf eine Darstellung der Prognosequalität in Abhängigkeit vom Zeitraum bis zum Zieltermin hinaus.

Dies ist dadurch zu realisieren, das man eine Prognose als ein Datenobjekt ansieht. Der Zeitstempel des Messwerts ist der Zeitstempel, wann die Prognose erstellt wurde. Die Prognosedaten werden als ein Array von Wetterdaten mit Zeitstempel als Datensatz abgelegt. Für jedes Prognose-Intervall (z.B. 14 Tage, 7 Tage 3 Tage, 1 Tag) wird eine eigene Kanalgruppe in dem Datensatz angelegt. Ob ein Datensatz Prognosedaten beinhaltet, wird beispielsweise in den Metadaten des Datensatzes abgelegt.

Das Verfahren umfasst vorzugsweise die Schritte:

a. Erstellen eines zweidimensionalen (2D) oder dreidimensionalen (3D), virtuellen Modells der elektrischen Schaltanlage durch die Recheneinheit,
b. Anzeigen des Modells mit einem Anzeigemittel als grafische Benutzeroberfläche zur Benutzung des Verfahrens.

Das virtuelle Modell wird in dieser Beschreibung auch als "digitaler Zwilling" der elektrischen Schaltanlage bezeichnet.

Insbesondere bei Altanlagen ist die Erstellung eines 3D-Modells in vielen Fällen zu aufwändig und damit zu teuer. Mit einer oder mehreren 2D-Darstellungen wird aber eine ähnliche Bedienungen ermöglicht. Das 2D.Modell kann beispielsweise basierend auf Konstruktionszeichnungen erstellt werden. Diesen Zeichnungen können Aktionspunkte entsprechend den angebundenen Komponenten überlagert werden. Zur besseren Übersicht lassen sich die Aktionspunkte vorzugsweise zu Gruppen zusammenfassen, die auf Knopfdruck einzeln sichtbar und unsichtbar gesetzt werden können.

Bei der 2D-Ausprägung sind deutlich weniger Informationen verfügbar als in der 3D-Ausprägung. Z.B. sind die Asset-Positionen nicht exakt verfügbar, weshalb Kameraschwenks auf Assets manuell einzulernen sind.

Das Erstellen des dreidimensionalen Modells kann beispielsweise aus Planungsdaten der elektrischen Schaltanlage, insbesondere aus 3D-CAD-Daten, und/oder aus visuellen Bilddaten der elektrischen Schaltanlage erfolgen.

Das dreidimensionale Modell ermöglicht einem Benutzer eine virtuelle Begehung der elektrischen Schaltanlage. Durch das Anzeigen des Modells als grafische Benutzeroberfläche kann dem Benutzer eine große Menge von Daten besonders verständlich und effizient mit einem Anzeigemittel begrenzter Größe, beispielsweise einem Bildschirm oder einer Virtual-Reality-Brille, angezeigt werden.

Das dreidimensionale Modell hat den Vorteil größtmöglicher Verständlichkeit für den Benutzer, weil es der Wirklichkeit sehr viel näher ist als Tabellen, oder 2D-Schemata.

Das Anzeigen des dreidimensionalen Modells erfolgt vorzugsweise mit einer 3D-Computerspiel-Engine, beispielsweise mit einer plattform-unabhängigen Engine, insbesondere mit der Engine "Unity". Eine Computerspiel-Engine ist besonders leistungsfähig zur Anzeige des dreidimensionalen Modells. Eine plattformunabhängige Engine hat den Vorteil, dass der digitale Zwilling einem Benutzer auf unterschiedlichen Endgeräten, beispielsweise einer Virtual-Reality-Brille, einem Smartphone, einem Tablet-Computer, einem Laptop-Computer oder einem Desktop-Computer angezeigt werden kann.

Die Benutzeroberfläche ist vorzugsweise zum Anzeigen der Handlungsempfehlung in dem virtuellen Modell, bevorzugt an dem von der Handlungsempfehlung betroffenen Überwachungsobjekt, ausgelegt. Dadurch kann ein Benutzer die Handlungsempfehlung besonders einfach dem Überwachungsobjekt zuordnen.

Die Benutzeroberfläche ist vorzugsweise zum Aufrufen und Anzeigen von Werten von Zustandsgrößen des Überwachungsobjekts, Daten und/oder Metadaten aus der Datenbank, bevorzugt an dem zugehörigen Überwachungsobjekt, ausgelegt.

Die Daten können beispielsweise die aktuellen und/oder historische visuelle Bilddaten, infrarote Bilddaten und/oder Hilfsdaten des das Überwachungsobjekt enthaltenen Überwachungsbereichs umfassen. Die Daten können den aktuellen, einen historischen und/oder einen prognostizierten Wert, den Soll-Wert und/oder eine Differenz eines Werts vom Soll-Wert der Zustandsgröße des Überwachungsobjekts umfassen.

Mit Hilfe der in dem Modell übersichtlich darstellbaren Daten wird der Benutzer umfassend über den historischen, aktuellen und/oder einen prognostizierten oder simulierten zukünftigen Zustand des Überwachungsobjekts informiert und kann somit sinnvolle Entscheidungen für eine effiziente Betriebsführung der elektrischen Schaltanlage treffen.

Das virtuelle Modell kann den Status der Schaltanlage visualisieren. Beispiele:

a. Strom durch eine Leitung durch ein eingeblendetes Digital- oder Analog-Multimeter,

b. Darstellung von Bewegung und Status eines Trennschalters wie in der Realität,

c. Darstellung der realen Position eines Mastes im Vergleich zur Planung, durch Einblenden des visuellen Bildes in das Modell,

d. Unterschiede zwischen Soll- und Ist-Positionen von Assets stehen mit Hilfe der visuellen Bilder nahezu in Echtzeit zur Verfügung. Dies ist sehr viel schneller und preiswerter als der Einsatz von Drohnen, weil die dabei zum Einsatz kommende Photogrammmetrie sehr viel rechenaufwendiger ist. Die Position der visuellen Kamera ist fix und genau bekannt. Die Lokalisierung von Objekten kann mit den Pan-Tilt-Zoom Einstellungen der Kamera vorgenommen werden. Damit ist sogar eine realistische Fehlerrechnung möglich.

Die Benutzeroberfläche ist vorzugsweise zum Aufrufen und Anzeigen von externen Daten des Überwachungsobjekts aus externen Datenbanken ausgelegt. Die externen Daten können beispielsweise Stammdaten des Überwachungsobjekts, insbesondere technische Spezifikationen, umfassen. Die Stammdaten können weiterhin Hersteller, Artikel-Bezeichnungen, Seriennummern, ein Kaufdaten, eine Rechnungen, Service-Vorschriften und/oder durchgeführte und/oder geplante Instandhaltungsmaßnahmen des Überwachungsobjekts umfassen.

Die Benutzeroberfläche ist vorzugsweise zum Aufrufen und Steuern von externen Programmen zur Überwachung, Steuerung und/oder Verwaltung der elektrischen Schaltanlage ausgelegt.

Das Aufrufen der externen Daten und/oder Programme erfolgt vorzugsweise über Uniform Resource Identifier (URI), um ein eindeutiges und plattformunabhängiges Aufrufen zu ermöglichen. Die externen Programme können beispielsweise in einer in den digitalen Zwilling eingebetteten Internet-Browser-Seite geöffnet werden. In das Verfahren lassen sich somit prinzipiell beliebige Komponenten einbinden, die sich über URI mit ihren Übergabeparametern und/oder Webservices Nachrichten austauschen und sich so auch gegeneinander steuern können.

Die externen Programme können beispielsweise eine Asset-Management-System und/oder ein Entreprise-Ressource-Management-System umfassen.

Über das Aufrufen externer Daten und/oder Programme kann eine Vielzahl von Funktionalitäten zur umfassenden Betriebsführung der Schaltanlage zur Verfügung gestellt werden, ohne dass das Verfahren dadurch zu komplex wird.

Stand der Technik ist, dass viele Daten (statische und dynamische) verfügbar sind, diese aber manuell zusammengetragen werden müssen. Die Datenquellen und die Datenstrukturen sind höchst unterschiedlich und sehr heterogen.

Die vorhandenen Daten, insbesondere bei Altanlagen sind höchst unterschiedlich strukturiert und zugänglich. Z.B.: Reißbrett-Zeichnungen in Ordnern, 2D-CAD Zeichnungen in Ordnern und auf Datenträgern, 3D-CAD Zeichnungen mit proprietärem Datenformat, Messdaten in Einzelfiles, Alarme/Ereignisse in Meldebuchdateien. Heutzutage sind diese Papiere häufig eingescannt und in einer Verzeichnisstruktur abgelegt.

Moderne Schaltanlagen umfassen Datenquellen, die hochspezialisierte und sehr leistungsstarke Programme sind. Z.B.: 3D-CAD mit SQL-Datenbank, BIM, SCADA Leitsysteme, Asset-Management Programme, Ticket-Systeme, Dokumenten-Management Systeme, ERP-Systeme (z.B. SAP), iMaster (Messdatenerfassung und Ereignissystem), DocuCam (systematische Bilderfassung und Bildverarbeitung).

Reale Schaltanlagen sind in der Regel eine Kombination von Altanlagen und modernen Schaltanlagen, sodass die Datenerfassung und Datenauswertung zusätzlich erschwert wird.

Sämtliche aufgelisteten Informationen sind für eine effiziente Betriebsführung wichtig, aber bei modernen Schaltanlagen kann keines der existierenden Programme alle anfallenden Informationen verarbeiten und sinnvoll kombinieren.

Anstatt ein Programm zu schaffen, das alle Informationen verarbeiten kann, ist der erfindungsgemäße Ansatz, die existierenden Spezialprogramme zu vernetzen, indem entsprechende Verknüpfungen bereitgestellt werden, ähnlich wie eine Suchmaschine im Internet die Informationen bereitstellt. Wie bei der Internet-Suchmaschine wird eine Benutzeroberfläche als Ausgangspunkt, und eine Datenbank mit den verfügbaren Links im Hintergrund benötigt.

Vorzugsweise können zwischen dem Verfahren und den externen Programmen bidirektional Informationen ausgetauscht werden. So können aus dem virtuellen Modell heraus Aktionen ausgelöst werden, die externe Programme aufrufen, während im virtuellen Modell von den externen Programmen bereitgestellte externe Daten visualisiert werden, wobei es sich um statische oder "Echtzeit"-Daten handeln kann. Aus einem externen Programm können umgekehrt Assets im virtuellen Modell selektiert werden.

So kann beispielsweise, wenn das Verfahren bei einem Überwachungsobjekt eine Fehlfunktion feststellt, in einem Asset-Management-System automatisch dieses Überwachungsobjekt ausgewählt werden. Oder wenn in dem Asset-Management-System ein Überwachungsobjekt ausgewählt wird, wird im virtuellen Modell automatisch ein aktuelles Kamerabild dieses Überwachungsobjekts angezeigt.

Sollten zu einem externen Programm keine Software-Schnittstellen verfügbar sein, so ist vorzugsweise dennoch ein elementarer Informationsaustausch zwischen dem virtuellen Modell und dem externen Programm möglich. So ist es beispielsweise möglich, dass aus einer Visualisierung des virtuellen Modells in einem Browser aus Sicherheitsgründen nur neue Browser-Tabs in dieser Browser-Instanz geöffnet werden können. Soll beispielsweise auf ein 3D-CAD Programm zugegriffen werden, so kann die Kommandozeile zum manuellen Start des Programms beispielsweise in der Visualisierung zur Verfügung gestellt werden. Damit kann manuell das externe Programm gestartet werden. Der direkte Sprung auf ein in dem virtuellen Modell selektiertes Asset kann dem externen Programm als Übergabe-Parameter der Kommandozeile mitgegeben werden.

Versteht das externe Programm die Übergabe-Parameter nicht, kann auch der Asset-Name in die Zwischenablage kopiert werden. Mit der Suchfunktion des externen Programms kann dann das Asset angesprungen werden. Dies kann auch in die andere Richtung funktionieren, wenn über den Namen des Assets im externen Programm dieses Asset im virtuellen Modell lokalisiert und selektiert wird.

Die Benutzeroberfläche ist vorzugsweise zum Ansteuern der zumindest einen Kamera und/oder des zumindest einen Mikrofons und zum Wiedergeben von durch die Kamera und/oder das Mikrofon aufgenommenen Bildern und/oder Geräuschen ausgelegt.

Die zumindest eine Kamera kann eine Mehrzahl von Betriebsmodi aufweisen. Die Kamera kann einen Überwachungsmodus aufweisen, in dem die Kamera automatisch in regelmäßigen Abständen auf eine Anzahl von Überwachungsobjekten ausgerichtet wird, dabei können Bilddaten der Überwachungsobjekte in einer oder mehreren Vergrößerungsstufen aufgenommen werden.

Die Kamera kann einen Privatsphäre-Modus aufweisen, der für einen Zeitraum aktiviert wird, für den einer Person eine Genehmigung erteilt wurde, die Schaltanlage zu betreten. Die Aktivierung kann beispielsweise automatisch auf Basis von in einem Asset-Management-System der Schaltanlage hinterlegten Daten, insbesondere auf Basis eines Wartungsplans, oder von einer Leitwarte der Schaltanlage aus erfolgen. Im Privatsphäre-Modus werden die von der Kamera aufgenommenen Bilder beispielsweise nicht oder nur mit verringerter Auflösung weitergeleitet und/oder gespeichert, sodass die Person nicht erkennbar ist und ihre Privatsphäre geschützt wird.

Die Kamera kann einen Hand-Modus aufweisen, in dem die Kamera von einem Benutzer manuell bedient wird.

Ein Übergang vom Privatsphäre-Modus in den Hand-Modus kann gesperrt sein, um die Privatsphäre der Person zu schützen. Um im Notfall dennoch eine manuelle Bedienung der Kamera zu ermöglichen, kann die Kamera einen Zwangshand-Modus aufweisen, mit dem der Übergang vom Privatsphäre-Modus in den Hand-Modus freigegeben wird.

Die Kamera kann außerdem einen Wartungsmodus zur Wartung der Kamera umfassen.

Die Benutzeroberfläche ist vorzugsweise zum Anzeigen eines simulierten Blickfelds einer virtuellen Kamera in dem Modell zur Planung der Positionierung einer realen Kamera an der Schaltanlage ausgelegt. Mit Hilfe des simulierten Blickfelds kann die Recheneinheit oder ein Benutzer prüfen, ob die gewünschten Überwachungsobjekte für die Kamera optisch zugänglich sind. Dadurch kann eine optimale Position für die Kamera wesentlich schneller und einfacher gefunden werden als durch Probe-Positionierungen der realen Kamera an der Schaltanlage. Bei der Simulation des Blickfelds werden vorzugsweise die Grenzen der Kameraoptik und/oder des Schwenk-Neige-Zoom-Bereiches der Kamers berücksichtigt.

Die Benutzeroberfläche ist vorzugsweise zum Eingeben von Betriebsparametern der elektrischen Schaltanlage für ein Prognostizieren eines prognostizierten Zukunfts-Werts der Zustandsgröße des Überwachungsobjekts und/oder zur Steuerung der Schaltanlage ausgelegt.

Um im virtuellen Modell schnell und übersichtlich zu den gewünschten Informationen zu kommen, ist ein Menüsystem vorteilhaft. Über das Menüsystem können beispielsweise Stammdaten, Bilder, Messdaten und Alarme/Ereignisse eines selektierten Assets visualisiert werden. Aus dem Menüsystem können außerdem externe Programme und/oder externe Daten aufgerufen werden.

Der globale Zustand der Schaltanlage wird beispielsweise primär über ein freischwebendes Alarmsymbol über die Ampelfarben Transparent oder Grün (=OK), Gelb (=Warnung), Rot (=Alarm) im virtuellen Modell visualisiert. Ist ein Alarm einem Asset zugeordnet, kann dieses zusätzlich auch farbig, insbesondere in Gelb oder Rot, dargestellt werden.

Ein Klick auf das Alarmsymbol öffnet beispielsweise ein Anzeigefenster mit einer Menü-Auswahl zu zusätzlichen Informationen, beispielsweise zu einer Liste aller anstehenden Warnungen und Alarme mitsamt Beschreibung und Zeitstempel, und/oder zu einer Handlungsempfehlung.

Weiterhin erlaubt das virtuelle Modell vorzugsweise die Anzeige von Live-Bildern der zumindest einen Kamera als Mixed Reality.

Die zumindest eine Kamera muss zur Abarbeitung ihrer Aufgaben eine Vielzahl von, beispielsweise über 1000, Positionen ansteuern können, um dort Bilder aufzunehmen aus denen, beispielsweise über Methoden der Computer Vision Zustandsgrößen bestimmt werden können, die in der Datenbank als Datensätze mit Zeitstempel abgelegt werden können. Dies sollte nicht durch Einlernen der einzelnen anzusteuernden Positionen realisiert werden, da dies sehr fehlerträchtig und zeitaufwendig wäre

Die zumindest eine Kamera soll allein aus der Kenntnis der Asset-Positionen im virtuellen Modell die Überwachungsobjekte, beispielsweise über ihre Namen oder ihre Identifikationsmerkmale ansteuern können. Dazu müssen die exakte Position und Orientierung der Kamera in einem Koordinatensystem des Modells bekannt sein. In der Realität kann die Kamera aber nur schwer mit der notwendigen Genauigkeit, beispielsweise mit einer Positionsgenauigkeit unter 1 cm und/oder einer Winkelgenauigkeit unter 0,5°, positioniert und ausgerichtet werden.

Das Verfahren umfasst daher vorzugsweise ein Kalibrieren einer Position und/oder Ausrichtung der zumindest einen Kamera in dem virtuellen Modell, wobei das Kalibrieren ein manuelles Ausrichten der realen Kamera auf zumindest drei, bevorzugt zumindest sechs, Überwachungsobjekte der realen Schaltanlage, und ein Berechnen der Position und/oder Ausrichtung der Kamera in dem virtuellen Modell durch die Recheneinheit aus den Ausrichtungen auf die Überwachungsobjekte und den Positionen der gleichen Überwachungsobjekte in dem virtuellen Modell umfasst.

Das Verfahren umfasst vorzugsweise ein automatisches Ausrichten der realen Kamera auf ein Überwachungsobjekt durch die Recheneinheit anhand der Position und/oder Ausrichtung der Kamera in dem virtuellen Modell und der Position des Überwachungsobjekts in dem virtuellen Modell.

Das Aufnehmen des Schallspektrums umfasst vorzugsweise ein binaurale Tonaufnahme, wobei das zumindest eine Mikrofon bevorzugt ein Kunstkopfmikrofon, ein Kugelflächenmikrofon, ein Kopfbügelmikrofon und/oder eine Jecklin-Scheibe umfasst.

Geräusche sind zur Beurteilung des Zustands technischer Anlagen durch den Menschen elementar. Beispielsweise kann man die einwandfreie Funktion eines Automotors sehr viel früher durch Geräuschanalyse über die Ohren bewerten als durch eine visuelle Inspektion. Im täglichen Leben werden wir sehr oft durch ungewöhnliche Geräusche auf Gefahren aufmerksam. Mit der binauralen Stereophonie kann diese Erkenntnis im Rahmen des Verfahrens genutzt werden.

Die binaurale Tonaufnahme ist eine Erweiterung einer eindimensionalen Geräuschanalyse durch ein Mikrofon in den dreidimensionalen Raum, weil mit der binauralen Tonaufnahme Geräusche räumlich aufgelöst analysiert werden können. Mit der binauralen Tonaufnahme kann die Recheneinheit und/oder ein Benutzer Geräuschquellen lokalisieren und analysieren, beispielsweise um eine Fehlfunktion des Überwachungsobjekts festzustellen.

Die binaurale Tonaufnahme verhält sich zu einer normalen Tonaufnahme wie eine Bildaufnahme mit einer Schwenk-Neige-Zoom-Kamera zu einer Bildaufnahme mit einer einfachen fixierten Kamera. Die binaurale Tonaufnahme ist somit eine konsequente Erweiterung des virtuellen dreidimensionalen Modells der Schaltanlage vom Visuellen ins Akustische. Ein Benutzer kann somit die Schaltanlage bei einer "Begehung" des virtuellen Modells nicht nur visuell, sondern auch akustisch umfassend untersuchen.

Die binaurale Tonaufnahme kann ebenso wie andere Daten in einem Datensatz mit Zeitstempel gespeichert werden und steht somit zur späteren Wiedergabe und Analyse zur Verfügung.

Ein wesentlicher Vorteil des digitalen Zwillings liegt darin, dass er den Wert der Schaltanlage über die gesamte Lebensdauer der Schaltanlage von der Planung über den Bau und Betrieb bis zum Rückbau steigert, insbesondere durch eines oder mehrere der folgenden Merkmale:

a. Virtuelles, dynamisches Modell der physischen Schaltanlage,
b. Eindeutige Plattform für alle Beteiligten zeit- und ortsunabhängig,
c. Analysiert Zustandsdaten der Anlagenkomponenten (inkl. Sensorik),
d. Simuliert das Verhalten über gesamte Lebensdauer,
e. Harmonisiert Planung, Bau und Betrieb und ermöglicht innovative Wartungsstrategien,
f. Handlungsempfehlungen basieren auf technischen und finanziellen Analysen & Diagnosen,
g. Reduziert Ausfallrisiken und ungeplante Ausfallkosten durch frühzeitige Fehlererkennung.

Im Betrieb kann der digitale Zwilling die reale Schaltanlage ergänzen, indem er die Betriebsdaten analysiert und Empfehlungen für den optimierten Betrieb gibt.

Der digitale Zwilling ermöglicht vorzugsweise den Zugriff auf Informationen zu jedem einzelnen Bauteil der Schaltanlage. Bei einem Klick auf einen Transformator werden beispielsweise sämtliche verfügbare Wartungsprotokolle, aber auch Baupläne und Herstellerinformationen bereitgestellt. Diese Informationen werden vorzugsweise in einem benutzerdefinierten Dashboard übersichtlich dargestellt. So wird zum Beispiel das Livebild der Kamera mit der logisch verknüpften Information zum jeweiligen Bauteil sowie eine entsprechende Handlungsempfehlung für die Betriebsführung zusammen dargestellt.

Elektrotechnische Informationen des Leitsystems wie Strom, Spannung, Wirk- und Blindleistung können mit den Daten der Bilderkennungssoftware im digitalen Zwilling verknüpft werden, um die Fehleranalyse zu unterstützen. Hier liegt ein besonderer Vorteil des digitalen Zwillings: Je länger die intelligente und lernfähige Software des digitalen Zwillings Störungen mit den aufgenommenen Daten und Zustandsgrößen vergleicht, umso größer wird die Chance Störungen vorherzusagen, bevor diese auftreten.

Ein erfindungsgemäßes Computersystem ist zur Ausführung des erfindungsgemäßen Verfahrens zur automatisierten Überwachung einer elektrischen Schaltanlage ausgestaltet.

Das Computersystem umfasst zumindest eine Kamera, insbesondere eine PTZ-Kamera, zum synchronen Aufnehmen von visuellen Bilddaten und/oder infraroten Bilddaten eines Überwachungsbereichs der Schaltanlage

Das Computersystem umfasst eine Anzahl von Hilfssensoren zum Aufnehmen von Hilfsdaten synchron zu den Bilddaten, wobei die Hilfsdaten Betriebsdaten der Schaltanlage, ein mit zumindest einem Mikrofon synchron zu den Bilddaten in dem Überwachungsbereich aufgenommenes Schallspektrum und/oder Wetterdaten des Überwachungsbereichs umfassen.

Das Computersystem umfasst eine Datenbank.

Das Computersystem umfasst eine mit der zumindest einen Kamera, den Hilfssensoren und der Datenbank kommunikativ verbundene Recheneinheit, wobei die Recheneinheit

i. zum Erkennen eines Überwachungsobjekts in den visuellen Bilddaten und/oder den infraroten Bilddaten durch die Recheneinheit;

ii. zum Bestimmen eines Ist-Werts einer Zustandsgröße des Überwachungsobjekts aus den visuellen Bilddaten, den infraroten Bilddaten, und/oder den Hilfsdaten durch die Recheneinheit,

iii. zum Verknüpfen der synchron aufgenommenen visuellen Bilddaten, infraroten Bilddaten und Hilfsdaten mit dem daraus bestimmten Ist-Wert der Zustandsgröße zu einem Datensatz mit einem gemeinsamen Zeitstempel durch die Recheneinheit,

iv. zum Zwischenspeichern des Datensatzes in dem Zwischenspeicher, wobei der Zwischenspeicher als Ringspeicher oder als First-in-First-out-Speicher vordefinierter Länge ausgestaltet ist,

v. zum Versenden des Datensatzes aus dem Zwischenspeicher an die Datenbank durch die Recheneinheit,

vi. zum Anpassen einer Speicherrate zum Speichern des Datensatzes in der Datenbank durch die Recheneinheit abhängig von dem Ist-Zustand, den visuellen Bilddaten, den infraroten Bilddaten und/ oder den Hilfsdaten, wobei die Speicherrate kleiner oder gleich einer Aufnahmerate des Aufnehmens der visuellen Bilddaten, der infraroten Bilddaten und/oder der Hilfsdaten ist,

vii. zum Speichern des Datensatzes mit der Speicherrate in der Datenbank durch die Recheneinheit und

viii. zum Erstellen einer Handlungsempfehlung basierend zumindest auf dem Ist-Wert der Zustandsgröße durch die Recheneinheit aus dem in dem Zwischenspeicher zwischengespeicherten Datensatz vor dem Speichern des Datensatzes in der Datenbank ausgelegt ist.

Einzelne, mehrere oder alle Komponenten des Computersystems können insbesondere so ausgestaltet sein, wie zuvor im Zusammenhang mit dem erfindungsgemäßen Verfahren beschrieben, woraus sich die dort genannten Vorteile ergeben.

Die Erfindung betrifft ein Computerprogramm, umfassend Befehle, die ein, insbesondere erfindungsgemäßes, Computersystem bei der Ausführung des Computerprogramms durch das Computersystem dazu veranlassen, das erfindungsgemäße Verfahren zur automatisierten Überwachung einer elektrischen Schaltanlage auszuführen.

**Beispiele**

Weitere Vorteile, Ziele und Eigenschaften der Erfindung werden anhand nachfolgender Beispiele und Figuren erläutert, in welchen beispielhafte Ausgestaltungen der Erfindung, insbesondere bezogen auf die Überwachung eines Umspannwerkes, dargestellt sind.

**Beispiel 1**

Beispiel 1 behandelt die vorausschauende Instandhaltung eines Silikagel-Behälters an einem Transformator.

Der Transformator ist mit einem elektrisch nicht leitendem Öl gefüllt, um interne Überschläge zu verhindern. Er kann aber nicht hermetisch verschlossen werden, da äußere Luftdruckschwankungen dann den Außenmantel des Transformators verformen und zerstören würden. Er muss also mit der Außenluft verbunden sein, um Luftdruckschwankungen ausgleichen zu können. Um die Luftfeuchtigkeit aus der Außenluft zu entfernen, wird die Außenluft durch einen oder mehrere Behälter mit Feuchtigkeit absorbierendem Silikagel-Granulat geleitet, das die Luftfeuchtigkeit absorbiert. Zu Anfang ist das Granulat hellorange und wird mit zunehmender Feuchtigkeit dunkler, hin zum Bräunlichen.

Im Rahmen des Verfahrens wird in visuellen Bilddaten des Granulats der Rot-Anteil des Granulats im RGB-Farbraum gemessen. Der Rot-Anteil als Funktion der Zeit ist stetig fallend und verläuft näherungsweise linear. Es werden zyklisch Bilder des Granulats aufgenommen.

Zur Berechnung der Rest-Lebensdauer wird mit jedem Bild eine beispielsweise lineare Regression der Rot-Anteile seit dem letzten Wechsel des Granulats erstellt und in die Zukunft extrapoliert. Der Zeitraum, bis diese Gerade einen vorher definierten Schwellwert schneidet, ist die verbleibende Restzeit, bis das Granulat ausgetauscht werden muss.

Beispielsweise bei weniger als 10 Tagen Restzeit wird eine Handlungsempfehlung zum Austausch des Granulats erstellt und beispielsweise in einem Leitsystem eine entsprechende Meldung angezeigt.

**Beispiel 2**

Beispiel 2 behandelt die vorausschauende Instandhaltung einer Außenanlage am Beispiel des Rasenschnitts.

Im Rahmen des Verfahrens wird in visuellen Bilddaten der Außenanlage eine Wuchshöhe des Rasens gemessen. Das Rasenwachstum ist weniger gleichmäßig als die Farbänderung des Granulats aus Beispiel 1, da es stark von Niederschlag und Temperatur abhängt. Dennoch kann ebenso wie in Beispiel 1 aus einer beispielsweise linearen Regression der Wuchshöhe eine Restzeit bis zum Erreichen eines vordefinierten Schwellwerts bestimmt werden. Sobald die Restzeit einen vorbestimmten Wert unterschreitet, wird eine Handlungsempfehlung zum Rasenmähen erstellt und vorzugsweise an einer Benutzer versendet.

**Beispiel 3**

Beispiel 3 behandelt die Auswertung von Wärmebildern am Beispiel einer Mantelfläche eines Transformators.

In dem Wärmebild sind Bereiche gleicher Temperatur durch die gleiche Farbe gekennzeichnet. Mit Hilfe einer vordefinierten Markierungstemperatur kann die sichtbare Fläche des Transformators ermittelt werden, die oberhalb der Markierungstemperatur liegt. Dieser Flächeninhalt kann mit einer Übertragungsleistung des Transformators, mit Wetterdaten und/oder mit dem Sonnenstand korreliert werden. So können Fehlfunktionen detektiert und ein Verschleiß des Transformators gemessen werden.

**Kurze Beschreibung der Zeichnungen**

Weitere Vorteile, Ziele und Eigenschaften möglicher Ausgestaltungen der Erfindung werden anhand nachfolgender Beschreibung und anliegender Zeichnungen erläutert , in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.

Figur 1 zeigt schematisch eine erfindungsgemäße Ausgestaltung des Computersystems.

Figur 2 zeigt schematisch die Kalibrierung einer Position und/oder Ausrichtung der zumindest einen Kamera in dem virtuellen Modell (dreidimensionaler Fall).

Figur 3 zeigt schematisch die Kalibrierung für den zweidimensionalen Fall, dass die X-Y-Ebenen von Kamerakoordinatensystem und Modellkoordinatensystem parallel sind.

**Fig.1**

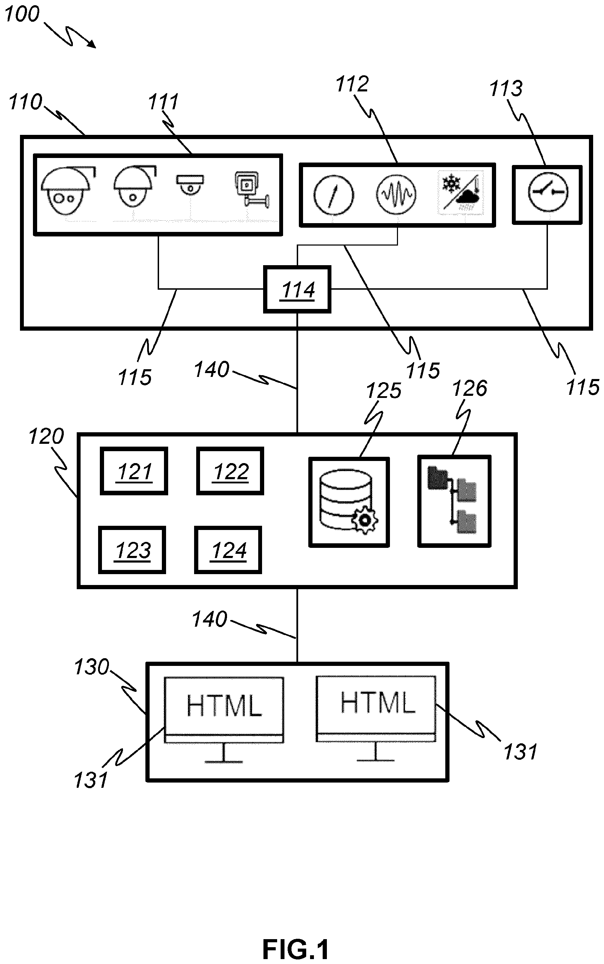

Figur 1 zeigt schematisch eine erfindungsgemäße Ausgestaltung des Computersystems 100.

Das Computersystem 100 kann als räumlich verteiltes System mit mehreren, beispielsweise drei, räumlich voneinander entfernten Bereichen ausgestaltet sein. Die Bereiche können ein Feld 110, in dem sich eine von dem Computersystem 100 mit dem erfindungsgemäßen Verfahren überwachte Schaltanlage (nicht dargestellt) befindet, eine Recheneinheit 120, beispielsweise einen Server, und einen Client 130 umfassen.

Das Computersystem 100 umfasst im Feld 110 eine Anzahl von Kameras 111 zur synchronen Aufnahme von visuellen und infraroten Bilddaten. Die Kameras 11 umfassen beispielsweise Multispektral-Schwenk-Neige-Zoom-Kameras zur Aufnahme von Bilddaten im visuellen Spektralbereich, im nahen und fernen Infrarotbereich, Schwenk-Neige-Zoom-Kameras mit Nachtsicht-Scheinwerfern zur Aufnahme von Bilddaten im visuellen Spektralbereich und im nahen Infrarotbereich und/oder statische Kameras zur Aufnahme von Bilddaten im visuellen Spektralbereich, im nahen und/oder fernen Infrarotbereich.

Das Computersystem 100 umfasst im Feld 110 eine Anzahl von Hilfssensoren 112 zur Aufnahme von Hilfsdaten synchron zu den Bilddaten, wobei die Hilfsdaten beispielsweise Betriebsdaten der Schaltanlage, ein mit zumindest einem Mikrofon synchron zu den Bilddaten in dem Überwachungsbereich aufgenommenes Schallspektrum und/oder Wetterdaten des Überwachungsbereichs umfassen. Die Hilfssensoren 112 umfassen beispielsweise Sensoren für langsame und/oder schnelle elektrische Messungen, zumindest ein Mikrofon, insbesondere ein Richtmikrofon und/oder ein Kunstkopfmikrofon, und/oder eine Wetterstation.

Das Computersystem 100 kann im Feld 110 eine Anzahl von Aktoren 113 zur Steuerung der Schaltanlage umfassen.

Das Computersystem 100 kann im Feld 110 eine Relais-Recheneinheit 114 umfassen, die kommunikativ, beispielsweise über ein kabelloses und/oder kabelgebundenes lokales Computernetzwerk 115, mit den Kameras 111, den Sensoren 112 und/oder den Aktoren 113 verbunden ist.

Die Relais-Recheneinheit 114 umfasst einen Zwischenspeicher zur lokalen Zwischenspeicherung von durch die Kameras 111 und/oder Hilfssensoren 112 aufgenommenen Daten.

Die Recheneinheit 120 ist direkt oder über die Relais-Recheneinheit 114 über ein kabelloses und/oder kabelgebundenes Computernetzwerk 140, beispielsweise über ein virtuelles privates Netzwerk (VPN), kommunikativ mit den Kameras 111, den Hilfssensoren 112 und/oder den Aktoren 113 verbunden.

Die Recheneinheit 120 führt ein Computerprogramm aus, das das erfindungsgemäße Verfahren implementiert. Das Computerprogramm kann mehrere Module umfassen, beispielsweise ein Aufnahmemodul 121 zur Aufnahme und Speicherung der von den Kameras 111 und/oder den Hilfssensoren 112 aufgenommenen Daten, ein Modellierungsmodul 122 zum Erstellen eines virtuellen, insbesondere dreidimensionalen, Modells der Schaltanlage und zum Anzeigen des Modells als Benutzeroberfläche des erfindungsgemäßen Verfahrens, ein Wiedergabemodul 123 zur Wiedergabe von Bilddaten und/oder zumindest ein Applikationsmodul 124 zur Auswertung der aufgenommenen Daten und zur Erstellung von Handlungsempfehlungen.

Die Recheneinheit 120 umfasst eine Datenbank 125, beispielsweise eine objektrelationale Datenbank, zur Speicherung der aufgenommenen Daten. Zusätzlich kann die Recheneinheit 120 einen Bildspeicher 126 zur Speicherung der Bilddaten umfassen, weil die Bilddaten in der Regel eine wesentliche größere Datenmenge bilden als die Hilfsdaten. Der Bildspeicher 126 ist vorzugsweise als hierarchischer Speicher ausgestaltet.

Die Recheneinheit 120 ist über ein kabelloses und/oder kabelgebundenes Computernetzwerk 140, beispielsweise über ein virtuelles privates Netzwerk (VPN), kommunikativ mit dem Client 130 verbunden. Der Client 130 umfasst zumindest eine Benutzerschnittstelle 131, über die ein Benutzer das erfindungsgemäße Verfahren benutzen kann. Die Benutzerschnittstelle kann beispielsweise eine Darstellung des virtuellen Modells der Schaltanlage als grafische Benutzeroberfläche des Verfahrens umfassen. Die Darstellung kann beispielsweise mit einer HTML-Datei in einem Internetbrowser auf einem Bildschirm angezeigt werden.

**Fig.2**

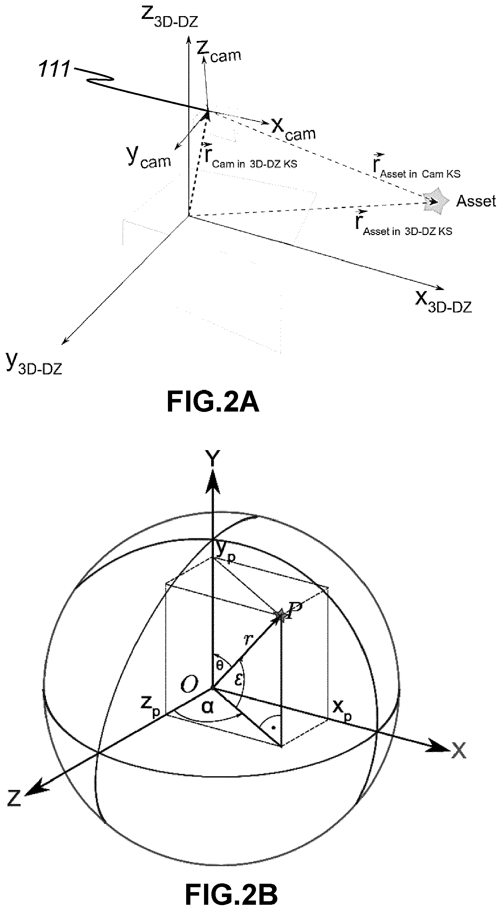

Figur 2 zeigt schematisch die Kalibrierung einer Position und/oder Ausrichtung der zumindest einen Kamera 111 in dem virtuellen Modell (dreidimensionaler Fall).

Das von den drei Achsen $x_{cam}$, $y_{cam}$ und $z_{cam}$ aufgespannte Koordinatensystem der Kamera 111 ist im Allgemeinen gegenüber dem von den drei Achsen $x_{3D-DZ}$, $y_{3D-DZ}$ und $z_{3D-DZ}$ aufgespannten Koordinatensystem des Modells verschoben und/oder verdreht (Fig.2A).

Um die Kamera 111 auf ein Asset auszurichten, muss die Kamera entlang des Assetvektors $r_{Asset\ in\ Cam\ KS}$ im Koordinatensystem der Kamera ausgerichtet werden, der aus dem Assetvektor $r_{Asset\ in\ 3D-DZ\ KS}$ im Koordinatensystem des Modells und dem Kameravektor $r_{Cam\ in\ 3D-DZ\ KS}$ im Koordinatensystem des Modells sowie den drei Verdrehungen der Kamera gegenüber dem Koordinatensystem des Modells berechnet werden kann.

Für die Berechnung sind 6 Parameter zu bestimmen:

a. 3 Komponenten $\delta_x$, $\delta_y$, $\delta_z$ der Translation $T(\delta_x, \delta_y, \delta_z)$ des Kamerakoordinatensystems gegenüber dem Modellkoordinatensystem;

b. 3 Rotationswinkel $\phi_x$, $\phi_y$, $\phi_z$ der 3 Rotationen $R_x(\phi_x)$, $R_y(\phi_y)$, $R_z(\phi_z)$ der Achsen des Kamerakoordinatensystems gegenüber dem Modellkoordinatensystem.

Dann können Positionen im Koordinatensystem des Modells und im Koordinatensystem der Kamera 111 ineinander umgerechnet werden. Dabei ist zu beachten, dass im Allgemeinen die Orientierung und die Ursprünge nicht identisch sind.

Um die 6 Parameter zu ermitteln, können zur Kalibration der 6 Parameter in der Inbetriebnahme-Phase des erfindungsgemäßen Computersystems 6 unterschiedliche Assets manuell angefahren werden. Wenn die Translation $T(\delta_x, \delta_y, \delta_z)$ und die drei Rotationen $R_x(\phi_x)$, $R_y(\phi_y)$, $R_z(\phi_z)$ auf die bekannte Position $(x_{dz}, y_{dz}, z_{dz})$ des Assets im Modellkoordinatensystem angewendet werden (Minuend in der folgenden Differenz), muss sich daraus die mit der Kamera gemessene Position (P) des Assets im Kamerakoordinatensystem ergeben (Subtrahend in der folgenden Differenz), die in Kugelkoordinaten mit Azimut (a) und Elevation ($\epsilon$) dargestellt ist (Fig.2B). Die folgende Differenz muss daher für jedes Asset mit null gleichgesetzt werden. Das sich ergebende Gleichungssystem kann in der Regel numerisch gelöst werden, um die Parameter der Koordinatentransformation zu bestimmen.

$$f(\vec{\delta}, \vec{\Phi}) = T(\delta_x, \delta_y, \delta_z) \cdot R_y(\Phi_y) \cdot R_z(\Phi_z) \cdot R_x(\Phi_x) \cdot \begin{pmatrix} x_{dz} \\ y_{dz} \\ z_{dz} \\ 1 \end{pmatrix} - \begin{vmatrix} x_{dz} - \delta_x \\ y_{dz} - \delta_y \\ z_{dz} - \delta_z \end{vmatrix} \cdot \begin{pmatrix} \sin\epsilon \cdot \cos\alpha \\ \sin\epsilon \cdot \sin\alpha \\ \cos\epsilon \\ 1 \end{pmatrix}$$

In der Differenz gibt es 6 Unbekannte (6 Parameter der Koordinatentransformation ($\delta_x$, $\delta_y$, $\delta_z$, $\phi_x$, $\phi_y$, $\phi_z$)) aber nur 5 Eingabeparameter (3 Positionskoordinaten ($x_{dz}$, $y_{dz}$, $z_{dz}$) des Assets im Modellkoordinatensystem, Azimut (a) und Elevation ($\varepsilon$) im Kamerakoordinatensystem). Der 6. Eingabeparameter (Abstand (r) vom Ursprung (O) im Kamerakoordinatensystem) taucht nicht auf, weil die Positionen in den beiden Koordinatensystemen über die Translation miteinander verknüpft sind.

Im zweidimensionalen Fall, wenn $\phi_x = \phi_y = 0$, also wenn die (X,Y)-Ebenen des Modellkoordinatensystems und des Kamerakoordinatensystem parallel sind, können ohne Kenntnis von $\delta_z$ (Höhe der Kamera) im Modellkoordinatensystem $\delta_x$, $\delta_y$ und $\delta_z$ bestimmt werden. Deshalb müssen die Kameras möglichst horizontal aufgehängt werden.

Die physische Höhe der Kamera über Grund ist nicht unbedingt identisch mit $\delta_z$, weil der Boden nicht eben ist.

**Fig.3**

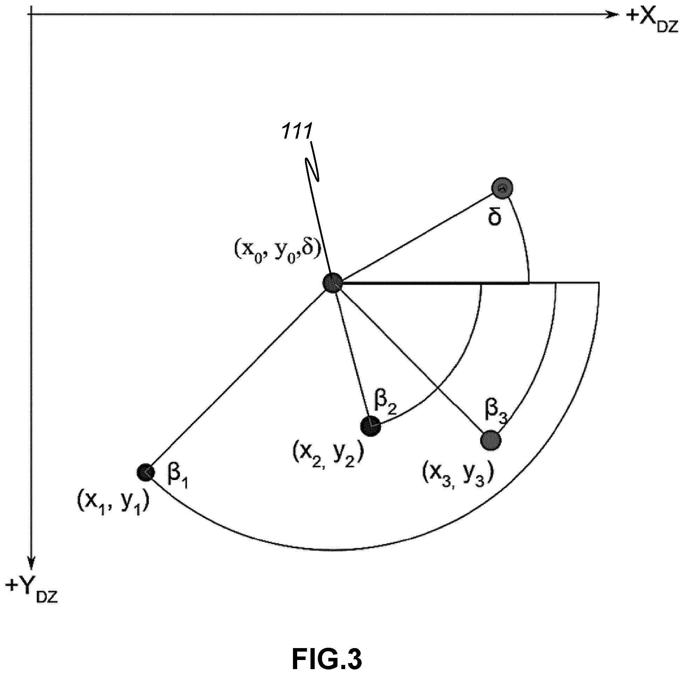

Figur 3 zeigt schematisch die Kalibrierung einer Position und/oder Ausrichtung der zumindest einen Kamera 111 in dem virtuellen Modell für den zweidimensionalen Fall, dass die X-Y-Ebenen von Kamerakoordinatensystem und Modellkoordinatensystem parallel sind.

Die Objekte im virtuellen Modell der Schaltanlage sind beispielsweise mit einer Genauigkeit von ca. 1 cm lokalisiert. Der Blickwinkel der Kamera 111 bei höchstem Zoom beträgt beispielsweise 2°. Die hohe Zahl von beispielsweise 1000 Messpunkten verbietet es, die Kamera 111 manuell auf alle Assets einzulernen.

Um die Kamera mit Hilfe des Modells in der realen Anlage sicher auf ein Asset zu positionieren, ist es daher notwendig, die Position und Ausrichtung der zumindest einen Kamera 111 in dem virtuellen Modell zu kalibrieren.

Der Montagepunkt und die horizontale Nivellierung (Tilt = Elevation) der Kamera 111 kann praktisch nur schwer mit einer ausreichenden Genauigkeit von beispielsweise 1 cm positioniert werden. Eine Genauigkeit von etwa 1 cm ist in der Regel ausreichend, weil die Pixelauflösung einer typischen Kamera in einem Abstand von 250 m (typische Ausdehnung einer Schaltanlage) ca. 0,5 cm beträgt. Für eine präzise Schwenk-Neige-Zoom-Steuerung der Kamera 111 im Modell, müssen sechs Positions- und Orientierungs-Parameter der Kamera 111 im Koordinatensystem des Modells bekannt sein.

Durch das Anfahren von sechs bekannten Asset-Positionen lassen sich die sechs Parameter mathematisch ermitteln. Werden mehr als 6 Positionen angefahren, kann die Genauigkeit dadurch statistisch erhöht werden.

Wegen der vorgegebenen Kameramontage weicht der Null-Winkel des Kamera-Azimuts (Pan) praktisch immer von der Orientierung des Modells ab. Deshalb muss die Kameraposition(x, y, z) und die Orientierung (Pan) über bekannte Asset-Positionen mathematisch ermittelt werden.

Wenn die X-Y-Ebenen von Kamerakoordinatensystem und Modellkoordinatensystem parallel sind, ergeben sich für die horizontale Positionskalibrierung in der X-Y-Ebene drei Unbekannte in der Kameraposition (x-Koordinate $x_0$, y-Koordinate $y_0$, Azimut $\delta$ im Modellkoordinatensystem). Wird die Kamera in der X-Y-Ebene auf drei Assets ausgerichtet, deren Position und Azimut (x-Koordinate $x_i$, y-Koordinate $y_i$, Azimut $\beta_i$ mit $i \in \{1; 2; 3\}$) im Modellkoordinatensystem bekannt sind, ergeben sich drei Gleichungen, aus denen die drei Unbekannten berechnet werden können:

a.

$$(y_1 - y_0) / (x_1 - x_0) = \tan(\beta_1 + \delta)$$

b.

$$(y_1 - y_0) / (x_1 - x_0) = \tan(\beta_1 + \delta)$$

c.

$$(y_1 - y_0) / (x_1 - x_0) = \tan(\beta_1 + \delta)$$

Im allgemeinen Fall, dass das Modellkoordinatensystem und das Kamerakoordinatensystem beliebig gegeneinander verschoben und verdreht sind, werden die sechs Parameter der Koordinatensystem-Transformationen programmunterstützt ermittelt, indem mindestens 6 bekannte Positionen von Assets bei der Inbetriebnahme manuell angefahren werden. Aus diesen mindestens 6 Positionen wird die Kalibration vom Programm ermittelt und beispielsweise in der System-Konfiguration abgelegt.

**EP 3 926 564 B1**

**Liste der Bezugszeichen**

| | | | |
|---|---|---|---|
| 100 | Computersystem | 122 | Modellierungsmodul |
| 110 | Feld | 123 | Wiedergabemodul |
| 111 | Kamera | 124 | Applikationsmodul |
| 112 | Hilfssensor | 125 | Datenbank |
| 113 | Aktor | 126 | Bildspeicher |
| 114 | Relais-Recheneinheit | 130 | Client |

| | | | |
|---|---|---|---|
| 115 | lokales Computernetzwerk | 131 | Benutzerschnittstelle |
| 120 | Server | 140 | Computernetzwerk |
| 121 | Aufnahmemodul | | |

**Patentansprüche**

**1.** Computerimplementiertes Verfahren zur automatisierten Überwachung einer elektrischen Schaltanlage mit folgenden Schritten:

a. synchrones Aufnehmen von visuellen Bilddaten und/oder infraroten Bilddaten eines Überwachungsbereichs der Schaltanlage mit zumindest einer Kamera (111),
b. bevorzugt Aufnehmen von Hilfsdaten synchron zu den Bilddaten mit einer Anzahl von Hilfssensoren (112), wobei die Hilfsdaten bevorzugt Betriebsparameter der Schaltanlage, ein mit zumindest einem Mikrofon synchron zu den Bilddaten in dem Überwachungsbereich aufgenommenes Schallspektrum und/oder Wetterdaten des Überwachungsbereichs umfassen,
c. Erkennen eines Überwachungsobjekts in den visuellen Bilddaten und/oder den infraroten Bilddaten durch eine Recheneinheit (120);
d. Bestimmen eines Ist-Werts einer Zustandsgröße des Überwachungsobjekts aus den visuellen Bilddaten und/oder den infraroten Bilddaten und bevorzugt aus den Hilfsdaten durch die Recheneinheit (120),
e. Verknüpfen der synchron aufgenommenen visuellen Bilddaten und/oder infraroten Bilddaten und bevorzugt der Hilfsdaten mit dem daraus bestimmten Ist-Wert der Zustandsgröße zu einem Datensatz mit einem gemeinsamen Zeitstempel durch die Recheneinheit (120),
f. Zwischenspeichern des Datensatzes in einem in der Schaltanlage angeordneten Zwischenspeicher, wobei der Zwischenspeicher als Ringspeicher oder als First-in-First-out-Speicher vordefinierter Länge ausgestaltet ist,
g. Versenden des Datensatzes aus dem Zwischenspeicher an eine Datenbank (125) durch die Recheneinheit (120),
h. Anpassen einer Speicherrate zum Speichern des Datensatzes durch die Recheneinheit (120) abhängig von dem Ist-Zustand, den visuellen Bilddaten, den infraroten Bilddaten und/oder den Hilfsdaten, wobei die Speicherrate kleiner oder gleich einer Aufnahmerate des Aufnehmens der visuellen Bilddaten, der infraroten Bilddaten und/oder der Hilfsdaten ist,
i. Speichern des Datensatzes mit der Speicherrate in der Datenbank (125) durch die Recheneinheit (120) und
j. Erstellen einer Handlungsempfehlung basierend zumindest auf dem Ist-Wert der Zustandsgröße durch die Recheneinheit (120) aus dem in dem Zwischenspeicher zwischengespeicherten Datensatz vor dem Speichern des Datensatzes in der Datenbank.

**2.** Verfahren nach Anspruch 1,
**gekennzeichnet durch** den Schritt:

a. Ermitteln eines Soll-Werts der Zustandsgröße durch die Recheneinheit (120),
b. wobei das Erstellen der Handlungsempfehlung ein Vergleichen des Ist-Werts mit dem Soll-Wert durch die Recheneinheit (120) umfasst,
c. wobei das Ermitteln des Soll-Werts der Zustandsgröße ein Einbeziehen der visuellen Bilddaten, der infraroten Bilddaten und/oder der Hilfsdaten umfasst.

17

3. Verfahren nach einem der Ansprüche 1 bis 2,
**dadurch gekennzeichnet, dass** das Speichern des Datensatzes

a. ein Paketieren mehrerer Datensätze mit aufeinanderfolgenden Zeitstempeln zu einem Datenpaket umfasst,
b. ein Berechnen von dem Datenpaket zugeordneten Metadaten aus den zu dem Datenpaket paketierten Daten umfasst und
c. ein Speichern der Metadaten in der Datenbank (125) umfasst,
d. wobei die Metadaten bevorzugt auf einem Speichermedium mit einer kürzeren Zugriffszeit gespeichert werden als die Datensätze.

4. Verfahren nach Anspruch 3,
**gekennzeichnet durch** den Schritt:

a. Abrufen von Daten, deren Zeitstempel in einem Zeitintervall liegt, aus der Datenbank (125) durch die Recheneinheit (120),
b. wobei bei einer Länge des Zeitintervalls bis zu einer Grenzlänge die Daten der Datensätze, deren Zeitstempel in dem Zeitintervall liegt, abgerufen werden und
c. bei einer Länge des Zeitintervalls oberhalb der Grenzlänge nur die Metadaten der Datenpakete, deren Zeitstempel in dem Zeitintervall liegt, abgerufen werden,
d. wobei die Grenzlänge bevorzugt so gewählt ist, dass die abgerufenen Daten oder Metadaten von einem Anzeigemittel vollständig angezeigt werden können.

5. Verfahren nach einem der Ansprüche 1 bis 4,
**gekennzeichnet durch** den Schritt:

a. Abrufen von Daten, deren Zeitstempel in einem Zeitintervall liegt, aus der Datenbank (125) durch die Recheneinheit (120),
b. wobei das Abrufen ein Aggregieren der Daten zur Reduzierung der abgerufenen Datenmenge umfasst,
c. wobei das Aggregieren bevorzugt so ausgestaltet ist, dass die aggregierten Daten von einem Anzeigemittel vollständig angezeigt werden können.

6. Verfahren nach einem der Ansprüche 1 bis 5,
**dadurch gekennzeichnet, dass**

a. das Speichern ein objektorientiertes binäres Speichern umfasst
b. wobei die Datenbank (125) eine objektrelationale Datenbank (125) umfasst.

7. Verfahren nach einem der Ansprüche 1 bis 6,
**dadurch gekennzeichnet, dass**
das Erkennen des Überwachungsobjekts und/oder das Bestimmen des Ist-Werts der Zustandsgröße des Überwachungsobjekts ein Anwenden von Computer Vision auf die infraroten und/oder visuellen Bilddaten umfasst.

8. Verfahren nach einem der Ansprüche 1 bis 7,
**gekennzeichnet durch** den Schritt:
Prognostizieren eines prognostizierten Zukunfts-Werts der Zustandsgröße des Überwachungsobjekts für einen Ziel-Zeitpunkt durch die Recheneinheit (120) auf Basis eines aktuellen Ist-Werts der Zustandsgröße unter Einbeziehung von historischen Vergangenheits-Werten der Zustandsgröße und/oder von aktuellen, historischen und/oder prognostizierten Bilddaten, Hilfsdaten und/oder weiteren Zustandsgrößen.

9. Verfahren nach Anspruch 8,
**gekennzeichnet durch** die Schritte:

a. Ablegen des Zukunfts-Werts der Zustandsgröße in der Datenbank (125) durch die Recheneinheit (120),
b. Abgleichen des Zukunfts-Werts mit einem basierend auf einem anderen Ist-Wert prognostizierten Zukunfts-Wert der Zustandsgröße mit dem gleichen Ziel-Zeitpunkt wie der Zukunfts-Wert und/oder mit dem Ist-Wert der Zustandsgröße zum Ziel-Zeitpunkt des Zukunfts-Werts durch die Recheneinheit (120) und
c. Optimieren des Prognostizierens basierend auf dem Ergebnis des Abgleichens durch die Recheneinheit (120).

**10.** Verfahren nach einem der Ansprüche 1 bis 9,
**gekennzeichnet durch** die Schritte:

a. Erstellen eines zweidimensionalen oder dreidimensionalen, virtuellen Modells der elektrischen Schaltanlage durch die Recheneinheit (120),
b. Anzeigen des Modells mit einem Anzeigemittel als grafische Benutzeroberfläche zur Benutzung des Verfahrens,
c. wobei die Benutzeroberfläche

i. zum Anzeigen der Handlungsempfehlung in dem Modell, bevorzugt an dem von der Handlungsempfehlung betroffenen Überwachungsobjekt, ausgelegt ist,
ii. zum Aufrufen und Anzeigen von Werten von Zustandsgrößen des Überwachungsobjekts, Daten und/oder Metadaten aus der Datenbank (125), bevorzugt an dem zugehörigen Überwachungsobjekt, ausgelegt ist,
iii. zum Aufrufen und Anzeigen von externen Daten des Überwachungsobjekts aus externen Datenbanken ausgelegt ist,
iv. zum Aufrufen und Steuern von externen Programmen zur Überwachung, Steuerung und/oder Verwaltung der elektrischen Schaltanlage ausgelegt ist,
v. zum Ansteuern der zumindest einen Kamera (111) und/oder des zumindest einen Mikrofons und zum Wiedergeben von durch die Kamera (111) und/oder das Mikrofon aufgenommenen Bildern und/oder Geräuschen ausgelegt ist,
vi. zum Anzeigen eines simulierten Blickfelds einer virtuellen Kamera in dem Modell zur Planung der Positionierung einer realen Kamera (111) an der Schaltanlage ausgelegt ist und/oder
vii. zum Eingeben von Betriebsparametern der elektrischen Schaltanlage für ein Prognostizieren eines prognostizierten Zukunfts-Werts der Zustandsgröße des Überwachungsobjekts und/oder zur Steuerung der Schaltanlage ausgelegt ist.

**11.** Verfahren nach Anspruch 10,
**gekennzeichnet durch** den Schritt:

a. Kalibrieren einer Position und/oder Ausrichtung der zumindest einen Kamera (111) in dem virtuellen Modell,
b. wobei das Kalibrieren

i. ein manuelles Ausrichten der realen Kamera (111) auf zumindest drei, bevorzugt zumindest sechs, Überwachungsobjekte der realen Schaltanlage, und
ii. ein Berechnen der Position und/oder Ausrichtung der Kamera (111) in dem virtuellen Modell durch die Recheneinheit (120) aus den Ausrichtungen auf die Überwachungsobjekte und den Positionen der gleichen Überwachungsobjekte in dem virtuellen Modell umfasst,

c. wobei das Verfahren ein automatisches Ausrichten der realen Kamera (111) auf ein Überwachungsobjekt durch die Recheneinheit (120) anhand der Position und/oder Ausrichtung der Kamera (111) in dem virtuellen Modell und der Position des Überwachungsobjekts in dem virtuellen Modell umfasst.

**12.** Computersystem (100) zur Ausführung des Verfahrens nach einem der Ansprüche 1 bis 11 zur automatisierten Überwachung einer elektrischen Schaltanlage mit

a. zumindest einer Kamera (111) zum synchronen Aufnehmen von visuellen Bilddaten und/oder infraroten Bilddaten eines Überwachungsbereichs der Schaltanlage,
b. bevorzugt einer Anzahl von Hilfssensoren (112) zum Aufnehmen von Hilfsdaten synchron zu den Bilddaten, wobei die Hilfsdaten Betriebsdaten der Schaltanlage, ein mit zumindest einem Mikrofon synchron zu den Bilddaten in dem Überwachungsbereich aufgenommenes Schallspektrum und/oder Wetterdaten des Überwachungsbereichs umfassen,
c. einer Datenbank (125),
d. einem in der Schaltanlage angeordneten und als Ringspeicher oder als First-in-First-out-Speicher vordefinierter Länge ausgestalteten Zwischenspeicher, und
e. einer mit der zumindest einen Kamera (111), den Hilfssensoren (112), dem Zwischenspeicher, und der Datenbank (125) kommunikativ verbundenen Recheneinheit (120)

i. zum Erkennen eines Überwachungsobjekts in den visuellen Bilddaten und/oder den infraroten Bilddaten durch die Recheneinheit (120);

ii. zum Bestimmen eines Ist-Werts einer Zustandsgröße des Überwachungsobjekts aus den visuellen Bilddaten, den infraroten Bilddaten, und/oder den Hilfsdaten durch die Recheneinheit (120),

iii. zum Verknüpfen der synchron aufgenommenen visuellen Bilddaten, infraroten Bilddaten und Hilfsdaten mit dem daraus bestimmten Ist-Wert der Zustandsgröße zu einem Datensatz mit einem gemeinsamen Zeitstempel durch die Recheneinheit (120),

iv. zum Zwischenspeichern des Datensatzes in dem Zwischenspeicher, wobei der Zwischenspeicher als Ringspeicher oder als First-in-First-out-Speicher vordefinierter Länge ausgestaltet ist,

v. zum Versenden des Datensatzes aus dem Zwischenspeicher an die Datenbank (125) durch die Recheneinheit (120),

vi. zum Anpassen einer Speicherrate zum Speichern des Datensatzes in der Datenbank durch die Recheneinheit (120) abhängig von dem Ist-Zustand, den visuellen Bilddaten, den infraroten Bilddaten und/oder den Hilfsdaten, wobei die Speicherrate kleiner oder gleich einer Aufnahmerate des Aufnehmens der visuellen Bilddaten, der infraroten Bilddaten und/oder der Hilfsdaten ist,

vii. zum Speichern des Datensatzes mit der Speicherrate in der Datenbank (125) durch die Recheneinheit (120) und

viii. zum Erstellen einer Handlungsempfehlung basierend zumindest auf dem Ist-Wert der Zustandsgröße durch die Recheneinheit (120) aus dem in dem Zwischenspeicher zwischengespeicherten Datensatz vor dem Speichern des Datensatzes in der Datenbank.

13. Computerprogramm, umfassend Befehle, die ein Computersystem (100) bei der Ausführung des Computerprogramms durch das Computersystem (100) dazu veranlassen, das Verfahren nach einem der Ansprüche 1 bis 11 zur automatisierten Überwachung einer elektrischen Schaltanlage auszuführen.

## Claims

1. A computer-implemented method for the automated monitoring of an electrical switchgear comprising the following steps:

   a. synchronised recording of visual image data and/or infrared image data of a monitoring area of the switchgear with at least one camera (111),

   b. preferably recording auxiliary data synchronously with the image data with a number of auxiliary sensors (112), the auxiliary data preferably comprising operating parameters of the switchgear, a sound spectrum recorded with at least one microphone synchronously with the image data in the monitoring area and/or weather data of the monitoring area,

   c. recognising a monitored object in the visual image data and/or the infrared image data by a computing unit (120),

   d. determination of an actual value of a state variable of the monitored object from the visual image data and/or from the infrared image data and preferably from the auxiliary data by the computing unit (120),

   e. linking of the synchronously recorded visual image data and/or infrared image data and preferably the auxiliary data with the actual value of the state variable determined therefrom to form a data set with a common time stamp by the computing unit (120),

   f. buffering the data set in a buffer memory arranged in the switchgear, whereby the buffer memory is designed as a ring memory or as a first-in-first-out memory of predefined length,

   g. sending the data set from the buffer memory to a database (125) by the computing unit (120),

   h. adapting a storage rate for storing the data set by the computing unit (120) depending on the actual value of the state variable, the visual image data, the infrared image data and/or the auxiliary data, wherein the storage rate is less than or equal to a recording rate of recording the visual image data, the infrared image data and/or the auxiliary data,

   i. storing the data set at the storage rate in the database (125) by the computing unit (120) and

   j. creation of a recommendation for action based at least on the actual value of the state variable by the computing unit (120) from the data set temporarily stored in the buffer memory before the data set is stored in the database.

2. The method according to claim 1,
   **characterised by** the step of

   a. determination of a target value of the state variable by the computing unit (120),

b. wherein the creation of the recommendation for action comprises a comparison of the actual value with the target value by the computing unit (120),

c. wherein determining the target value of the state variable comprises including the visual image data, the infrared image data and/or the auxiliary data.

**3.** The method according to one of claims 1 to 2,
**characterised in that**
saving the data set

a. comprises the packaging of several data sets with consecutive time stamps into one data package,

b. comprises a calculation of metadata assigned to the data package from the data packaged into the data package, and

c. comprises storing the metadata in the database (125),

d. whereby the metadata is preferably stored on a storage medium with a shorter access time than the data sets.

**4.** The method according to claim 3,
**characterised by** the step of

a. retrieval of data, the time stamp of which lies in a time interval, from the database (125) by the computing unit (120),

b. wherein, if the length of the time interval is up to a limit length, the data of the data sets whose time stamp lies within the time interval are retrieved, and

c. only the metadata of the data packages whose timestamp lies within the time interval is retrieved, if the time interval is longer than the limit length,

d. whereby the limit length is preferably selected so that the retrieved data or metadata can be displayed in full by a display device.

**5.** The method according to any one of claims 1 to 4,
**characterised by** the step of

a. retrieval of data, the time stamp of which lies in a time interval, from the database (125) by the computing unit (120),

b. where the retrieval involves an aggregation of the data to reduce the amount of data retrieved,

c. whereby the aggregation is preferably designed in such a way that the aggregated data can be displayed in full by a display device.

**6.** The method according to one of claims 1 to 5,
**characterised in that**

a. the storage comprises an object-orientated binary storage,

b. wherein the database (125) comprises an object-relational database (125).

**7.** The method according to one of claims 1 to 6,
**characterised in that**
recognising the monitored object and/or determining the actual value of the state variable of the monitored object comprises applying computer vision to the infrared and/or visual image data.

**8.** The method according to any one of claims 1 to 7,
**characterised by** the step of
predicting a predicted future value of the state variable of the monitored object for a target time by the computing unit (120) on the basis of a current actual value of the state variable including historical past values of the state variable and/or current, historical and/or predicted image data, auxiliary data and/or further state variables.

**9.** The method according to claim 8,
**characterised by** the steps of

a. storage of the future value of the state variable in the database (125) by the computing unit (120),

b. comparison of the future value with a future value of the state variable predicted on the basis of another actual value with the same target time as the future value and/or with the actual value of the state variable at the target time of the future value by the computing unit (120), and

c. optimising the prediction based on the result of the comparison by the computing unit (120).

10. The method according to any one of claims 1 to 9,
**characterised by** the steps of

a. creation of a two-dimensional or three-dimensional virtual model of the electrical switchgear by the computing unit (120),
b. display of the model using a display device as a graphical user interface for using the method,
c. whereby the user interface

i. is designed to display the recommendation for action in the model, preferably on the monitored object affected by the recommendation for action,
ii. is designed for calling up and displaying values of state variables of the monitored object, data and/or metadata from the database (125), preferably on the associated monitored object,
iii. is designed to call up and display external data of the monitored object from external databases,
iv. is designed to call up and control external programmes for monitoring, controlling and/or managing the electrical switchgear,
v. is designed for controlling the at least one camera (111) and/or the at least one microphone and for reproducing images and/or sounds recorded by the camera (111) and/or the microphone,
vi. is designed to display a simulated field of view of a virtual camera in the model for planning the positioning of a real camera (111) on the switchgear and/or
vii. is designed for entering operating parameters of the electrical switchgear for predicting a predicted future value of the state variable of the monitored object and/or for controlling the switchgear.

11. The method according to claim 10,
**characterised by** the step of

a. calibrating a position and/or orientation of the at least one camera (111) in the virtual model,
b. whereby the calibration comprises

i. manual alignment of the real camera (111) to at least three, preferably at least six, monitored objects of the real switchgear, and
ii. calculating the position and/or orientation of the camera (111) in the virtual model by the computing unit (120) from the orientations on the monitored objects and the positions of the same monitored objects in the virtual model,

c. wherein the method comprises automatic alignment of the real camera (111) with a monitored object by the computing unit (120) based on the position and/or orientation of the camera (111) in the virtual model and the position of the monitored object in the virtual model.

12. A computer system (100) for carrying out the method according to one of claims 1 to 11 for the automated monitoring of an electrical switchgear comprising

a. at least one camera (111) for synchronised recording of visual image data and/or infrared image data of a monitoring area of the switchgear,
b. preferably a number of auxiliary sensors (112) for recording auxiliary data in synchronisation with the image data, the auxiliary data comprising operating data of the switchgear, a sound spectrum recorded with at least one microphone in synchronisation with the image data in the monitoring area and/or weather data of the monitoring area,
c. a database (125),
d. a buffer memory arranged in the switchgear and designed as a ring memory or as a first-in-first-out memory of predefined length, and
e. a computing unit (120) communicatively connected to the at least one camera (111), the auxiliary sensors (112), the buffer memory and the database (125)

i. for recognising a monitored object in the visual image data and/or the infrared image data by the computing unit (120),

ii. for determining an actual value of a state variable of the monitored object from the visual image data, the infrared image data, and/or the auxiliary data by the computing unit (120),

iii. for linking the synchronously recorded visual image data, infrared image data and auxiliary data with the actual value of the state variable determined therefrom to form a data set with a common time stamp by the computing unit (120),

iv. for buffering the data set in the buffer memory, wherein the buffer memory is designed as a ring memory or as a first-in-first-out memory of predefined length ,

v. for sending the data set from the buffer memory to the database (125) by the computing unit (120),

vi. for adjusting a storage rate for storing the data set in the database by the computing unit (120) depending on the actual value of the state variable, the visual image data, the infrared image data and/or the auxiliary data, wherein the storage rate is less than or equal to a recording rate of recording the visual image data, the infrared image data and/or the auxiliary data,

vii. for storing the data set at the storage rate in the database (125) by the computing unit (120), and

viii. for generating a recommendation for action based at least on the actual value of the state variable by the computing unit (120 ) from the data set temporarily stored in the buffer memory before storing the data set in the database .

13. A computer program comprising instructions which, upon execution of the computer program by the computer system (100), cause a computer system (100) to execute the method according to any one of claims 1 to 11 for automated monitoring of an electrical switchgear.

## Revendications

1. Procédé mis en oeuvre par ordinateur pour la surveillance automatisée d'une installation de commutation électrique, comprenant les étapes suivantes :

a. un enregistrement synchrone de données d'images visuelles et/ou de données d'images infrarouges d'une zone de surveillance de l'installation de commutation avec au moins une caméra (111),

b. de préférence un enregistrement de données auxiliaires en synchronisme avec les données d'image avec un certain nombre de capteurs auxiliaires (112), les données auxiliaires comprenant de préférence des paramètres de fonctionnement de l'installation de commutation, un spectre sonore enregistré avec au moins un microphone en synchronisme avec les données d'image dans la zone de surveillance et/ou des données météorologiques de la zone de surveillance,

c. une reconnaissance d'un objet à surveiller dans les données d'images visuelles et/ou les données d'images infrarouges par une unité de calcul (120) ;

d. une détermination par l'unité de calcul (120) d'une valeur réelle d'une variable d'état de l'objet à surveiller à partir des données d'images visuelles et/ou des données d'images infrarouges et de préférence à partir des données auxiliaires,

e. une combinaison par l'unité de calcul (120) des données d'images visuelles et/ou des données d'images infrarouges enregistrées de manière synchrone et de préférence des données auxiliaires avec la valeur réelle de la variable d'état déterminée à partir de celles-ci pour former un jeu de données avec un horodatage commun,

f. un stockage temporaire du jeu de données dans une mémoire tampon disposée dans l'installation de commutation, la mémoire tampon étant conçue comme une mémoire circulaire ou comme une mémoire premier entré-premier sorti de longueur prédéfinie,

g. un envoi du jeu de données de la mémoire tampon à une base de données (125) par l'unité de calcul (120),

h. un ajustement d'un taux de stockage pour stocker le jeu de données par l'unité de calcul (120) en fonction de la valeur réelle de la variable d'état, des données d'images visuelles, des données d'images infrarouges et/ou des données auxiliaires, le taux de stockage étant inférieur ou égal à un taux d'enregistrement de l'enregistrement des données d'images visuelles, des données d'images infrarouges et/ou des données auxiliaires,

i. un stockage du jeu de données au taux de stockage dans la base de données (125) par l'unité de calcul (120), et

j. un établissement d'une recommandation d'action basée au moins sur la valeur réelle de la variable d'état par l'unité de calcul (120) à partir du jeu de données stocké temporairement dans la mémoire tampon avant le stockage du jeu de données à la base de données.

2. Procédé selon la revendication 1,
**caractérisé par** l'étape suivante :

a. une détermination d'une valeur cible de la variable d'état par l'unité de calcul (120),

b. l'établissement de la recommandation d'action comprenant une comparaison de la valeur réelle avec la valeur cible par l'unité de calcul (120),

c. la détermination de la valeur cible de la variable d'état comprenant l'inclusion des données d'images visuelles, des données d'images infrarouges et/ou des données auxiliaires.

3. Procédé selon l'une quelconque des revendications 1 à 2,
**caractérisé en ce que**
l'enregistrement du jeu des données

a. comprend une mise en paquets de plusieurs jeux de données avec des horodatages successifs en un paquet de données,

b. comprend un calcul de métadonnées associées au paquet de données à partir des données mises en paquet dans le paquet de données, et

c. comprend un stockage des métadonnées dans la base de données (125),

d. les métadonnées étant de préférence stockées sur un support de stockage ayant un temps d'accès plus court que les jeux de données.

4. Procédé selon la revendication 3,
**caractérisé par** l'étape suivante :

a. une récupération, par l'unité de calcul (120), de données dont l'horodatage se situe dans un intervalle de temps, à partir de la base de données (125),

b. les données des jeux de données dont l'horodatage se situe dans l'intervalle de temps étant récupérées pour une longueur de l'intervalle de temps allant jusqu'à une longueur limite, et

c. seules les métadonnées des paquets de données dont l'horodatage se situe dans l'intervalle de temps sont récupérées lorsque la longueur de l'intervalle de temps est supérieure à la longueur limite,

d. la longueur limite étant de préférence choisie de manière que les données ou métadonnées récupérées puissent être entièrement affichées par un moyen d'affichage.

5. Procédé selon l'une quelconque des revendications 1 à 4,
**caractérisé par** l'étape suivante :

a. une récupération, par l'unité de calcul (120), de données dont l'horodatage se situe dans un intervalle de temps, à partir de la base de données (125),

b. la récupération comprenant une agrégation des données pour réduire la quantité de données récupérées,

c. l'agrégation étant de préférence conçue de manière que les données agrégées puissent être entièrement affichées par un moyen d'affichage.

6. Procédé selon l'une quelconque des revendications 1 à 5,
**caractérisé en ce que**

a. le stockage comprend un stockage binaire orienté objet,

b. la base de données (125) comprenant une base de données relationnelle objet (125).

7. Procédé selon l'une quelconque des revendications 1 à 6,
**caractérisé en ce que**
la reconnaissance de l'objet à surveiller et/ou la détermination de la valeur réelle de la variable d'état de l'objet à surveiller comprend l'application d'une vision par ordinateur aux données d'images infrarouges et/ou visuelles.

8. Procédé selon l'une quelconque des revendications 1 à 7,
**caractérisé par** l'étape suivante :
une prévision d'une valeur future prédite de la variable d'état de l'objet à surveiller pour un moment cible par l'unité de calcul (120) sur la base d'une valeur réelle actuelle de la variable d'état en tenant compte de valeurs historiques passées de la variable d'état et/ou de données d'image actuelles, historiques et/ou prédites, de données auxiliaires et/ou d'autres variables d'état.

9. Procédé selon la revendication 8,

**caractérisé par** les étapes suivantes :

a. un stockage de la valeur future de la variable d'état dans la base de données (125) par l'unité de calcul (120),
b. une comparaison par l'unité de calcul (120) de la valeur future avec une valeur future de la variable d'état pronostiquée sur la base d'une autre valeur réelle et ayant le même moment cible que la valeur future et/ou avec la valeur réelle de la variable d'état au moment cible de la valeur future, et
c. optimiser la prédiction sur la base du résultat de la mise en correspondance par l'unité de calcul (120).

**10.** Procédé selon l'une quelconque des revendications 1 à 9,
**caractérisé par** les étapes suivantes :

a. une création d'un modèle virtuel bidimensionnel ou tridimensionnel de l'installation de commutation électrique par l'unité de calcul (120),
b. un affichage du modèle avec un moyen d'affichage comme interface utilisateur graphique pour utiliser le procédé,
c. l'interface utilisateur

i. étant conçu pour afficher la recommandation d'action dans le modèle, de préférence sur l'objet à surveiller concerné par la recommandation d'action,
ii. étant conçu pour récupérer et afficher des valeurs de variables d'état de l'objet à surveiller, des données et/ou des métadonnées provenant de la base de données (125), de préférence sur l'objet à surveiller associé,
iii. étant conçu pour récupérer et afficher des données externes de l'objet à surveiller provenant de bases de données externes,
iv. étant conçu pour appeler et commander des programmes externes de surveillance, de commande et/ou de gestion de l'installation de commutation électrique,
v. étant conçu pour commander l'au moins une caméra (111) et/ou l'au moins un microphone et pour reproduire des images et/ou des sons enregistrés par la caméra (111) et/ou le microphone,
vi. étant conçu pour afficher un champ de vision simulé d'une caméra virtuelle dans le modèle pour planifier le positionnement d'une caméra réelle (111) sur l'installation de commutation et/ou
vii. étant conçu pour entrer des paramètres de fonctionnement de l'installation de commutation électrique pour une prévision d'une valeur future prévue de la variable d'état de l'objet à surveiller et/ou pour la commande de l'installation de commutation.

**11.** Procédé selon la revendication 10,
**caractérisé par** l'étape suivante :

a. une calibration d'une position et/ou d'une orientation de l'au moins une caméra (111) dans le modèle virtuel,
b. la calibration compenant

i. un alignement manuel de la caméra réelle (111) sur au moins trois, de préférence au moins six, objets de surveillance de l'installation de commutation réelle, et
ii. un calcul par l'unité de calcul (120) de la position et/ou de l'orientation de la caméra (111) dans le modèle virtuel à partir des orientations vers les objets de surveillance et des positions des mêmes objets de surveillance dans le modèle virtuel,

c. le procédé comprenant un alignement automatique de la caméra réelle (111) sur un objet à surveiller par l'unité de calcul (120) sur la base de la position et/ou de l'orientation de la caméra (111) dans le modèle virtuel et de la position de l'objet à surveiller dans le modèle virtuel.

**12.** Système informatique (100) pour la mise en oeuvre du procédé selon l'une des revendications 1 à 11 pour la surveillance automatisée d'une installation de commutation électrique comprenant

a. au moins une caméra (111) pour l'enregistrement synchrone de données d'images visuelles et/ou de données d'images infrarouges d'une zone de surveillance de l'installation de commutation,
b. de préférence un certain nombre de capteurs auxiliaires (112) pour enregistrer des données auxiliaires en synchronisme avec les données d'images, les données auxiliaires comprenant des données de fonctionnement de l'installation de commutation, un spectre sonore enregistré avec au moins un microphone en synchronisme avec les données d'image dans la zone de surveillance et/ou des données météorologiques de la zone de surveillance,

c. une base de données (125),

d. une mémoire tampon disposé dans l'installation de commutation et conçu comme mémoire annulaire ou comme mémoire premier entré-premier sorti de longueur prédéfinie, et

e. une unité de calcul (120) reliée par communication à avec l'au moins une caméra (111), les capteurs auxiliaires (112), la mémoire intermédiaire, et la base de données (125)

> i. pour reconnaître un objet à surveiller dans les données d'images visuelles et/ou les données d'images infrarouges par l'unité de calcul (120) ;
>
> ii. pour déterminer une valeur réelle d'une variable d'état de l'objet à surveiller à partir des données d'image visuelles, des données d'images infrarouges, et/ou des données auxiliaires par l'unité de calcul (120),
>
> iii. pour combiner les données d'images visuelles, les données d'images infrarouges et les données auxiliaires enregistrées de manière synchrone avec la valeur réelle de la variable d'état déterminée à partir de celles-ci en un jeu de données avec un horodatage commun par l'unité de calcul (120),
>
> iv. pour stocker temporairement le jeu de données dans la mémoire tampon, la mémoire tampon étant conçue comme une mémoire circulaire ou comme une mémoire premier entré-premier sorti de longueur prédéfinie,
>
> v. pour envoyer le jeu de données de la mémoire tampon à la base de données (125) par l'unité de calcul (120),
>
> vi. pour ajuster un taux de stockage pour stocker le jeu de données dans la base de données par l'unité de calcul (120) en fonction de la valeur réelle de la variable d'état, des données d'images visuelles, des données d'images infrarouges et/ou des données auxiliaires, le taux de stockage étant inférieur ou égal à un taux d'enregistrement de l'enregistrement des données d'images visuelles, des données d'images infrarouges et/ou des données auxiliaires,
>
> vii. pour stocker le jeu de données au taux de stockage dans la base de données (125) par l'unité de calcul (120) et
>
> viii. pour établir une recommandation d'action basée au moins sur la valeur réelle de la variable d'état par l'unité de calcul (120) à partir du jeu de données stocké temporairement dans la mémoire tampon avant le stockage du jeu de données dans la base de données (125).

13. Programme informatique comprenant des instructions qui, lorsque le programme informatique est exécuté par un système informatique (100), amènent le système informatique (100) à exécuter le procédé selon l'une quelconque des revendications 1 à 11 pour la surveillance automatisée d'une installation de commutation électrique.

**FIG.1**

**FIG.2A**

**FIG.2B**

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190147655 A1
- CN 106451790 A

- EP 3236440 A1